# EUROPEAN PATENT APPLICATION

(11) **EP 4 664 661 A1**
(43) Date of publication of application: **17.12.2025**
(21) Application number: 25172929.9
(22) Date of filing: 28.04.2025
(51) Int. Cl.: H01M 50/531, H01M 50/533, H01M 50/538, H01M 50/54, H01M 50/534

(54) **SECONDARY BATTERY AND METHOD OF MANUFACTURING SECONDARY BATTERY**

(30) Priority: 13.06.2024 JP 2024095708
(71) Applicant: Prime Planet Energy & Solutions, Inc., Chuo-ku, Tokyo 103-0022 (JP)
(72) Inventor: OSHIMA, Kazuki, Tokyo, 103-0022 (JP); WAKIMOTO, Ryoichi, Tokyo, 103-0022 (JP)
(74) Representative: Kuhnen & Wacker Patent- und Rechtsanwaltsbüro PartG mbB

(57) **Abstract**

In the present secondary battery (1), a current collector (431) is a first stack in which a plurality of metal plates (4300) are stacked, the current collector (431) includes a first region (431A) and a second region (431B), a positive electrode tab group (250, 280) is joined to the first region (431A), a positive electrode current collection portion (420) is joined to the second region (431B), and the current collector (431) is bent between the first region (431A) and the second region (431B). According to the present secondary battery (1), it is possible to suppress occurrence of damage to the tab group.

## Description

### CROSS REFERENCE TO RELATED APPLICATIONS

This nonprovisional application is based on Japanese Patent Application No. 2024-095708 filed on June 13, 2024 with the Japan Patent Office, the entire contents of which are hereby incorporated by reference.

### BACKGROUND OF THE INVENTION

### Field of the Invention

The present technology relates to a secondary battery and a method of manufacturing the secondary battery.

### Description of the Background Art

Japanese Patent Laying-Open No. 2021-099936 relates to an invention of a power storage device and discloses a configuration in which a tab group connected to a current collector is bent.

### SUMMARY OF THE INVENTION

In order to attain the structure in which the tab group is bent, the length of the tab group needs to be long. When the length of the tab group is long, the tab group may be bent or curved unintendedly in a manufacturing process for a secondary battery or the like, with the result that the tab group may be damaged.

An object of the present technology is to provide: a secondary battery including a configuration by which occurrence of damage to a tab group can be suppressed; and a method of manufacturing the secondary battery.

The present technology provides the following secondary battery and the following method of manufacturing a secondary battery.
[1] A secondary battery comprising: an electrode assembly including a first electrode and a second electrode having a polarity different from a polarity of the first electrode; a case that accommodates the electrode assembly; a first tab group in which a plurality of first electrode tabs each electrically connected to the first electrode are stacked; and a first current collector connected to the first tab group, wherein the first current collector is a first stack in which a plurality of metal plates are stacked, the first current collector includes a first region and a second region, the first tab group is joined to the first region, another conductive member is joined to the second region, and the first current collector is bent between the first region and the second region.
[2] The secondary battery according to [1], comprising: a second tab group in which a plurality of second electrode tabs each electrically connected to the first electrode are stacked; and a second current collector connected to the second tab group, wherein the second current collector is a second stack in which a plurality of metal plates are stacked, the second current collector includes a third region and a fourth region, the second tab group is joined to the third region, the other conductive member is joined to the fourth region, and the second current collector is bent between the third region and the fourth region.
[3] The secondary battery according to [2], wherein the first current collector and the second current collector are overlapped with each other and are joined to the other conductive member.
[4] The secondary battery according to [3], wherein the other conductive member, the first current collector, and the second current collector are stacked in this order, and a tip of the first current collector protrudes with respect to a tip of the second current collector.
[5] The secondary battery according to any one of [2] to [4], wherein a first fuse portion is provided in the first current collector, a second fuse portion is provided in the second current collector, and the first fuse portion and the second fuse portion are disposed to be separated from each other.
[6] The secondary battery according to any one of [2] to [5], wherein the second region of the first current collector and the fourth region of the second current collector are joined to the other conductive member in such a positional relation that the second region and the fourth region do not face each other.
[7] The secondary battery according to any one of [1] to [6], wherein the first current collector includes a region in which the plurality of metal plates are joined together in the first region at a region not joined to the first tab group.
[8] The secondary battery according to [7], wherein a plurality of first recesses are formed in the first region of the first current collector at the region not joined to the first tab group, a plurality of second recesses are formed in a surface of the first tab group, and a depth of each of the first recesses is smaller than a depth of each of the second recesses.
[9] The secondary battery according to [7] or [8], wherein a plurality of first recesses are formed in the first region of the first current collector at a region not joined to the first tab group, a plurality of second recesses are formed in a surface of the first tab group, and an area of each of the first recesses is smaller than an area of each of the second recesses.
[10] The secondary battery according to any one of [1] to [9], wherein the first current collector includes a region in which the plurality of metal plates are joined together in the second region at a region not joined to the other conductive member.
[11] The secondary battery according to any one of [1] to [10], wherein the first current collector has a region in which the metal plates are not joined together in a region in which the first current collector is bent between the first region and the second region.
[12] The secondary battery according to any one of [1] to [11], wherein a length of a metal plate disposed on an outermost peripheral side of the first current collector in the region in which the first current collector is bent is longer than a length of a metal plate disposed on an inner side with respect to the metal plate disposed on the outermost peripheral side.
[13] The secondary battery according to any one of [1] to [12], wherein a length from a joining portion between the first current collector and the first tab group to a joining portion between the first current collector and the other conductive member is longer than a length from a root of the first tab group to the joining portion between the first current collector and the first tab group.
[14] A method of manufacturing a secondary battery, wherein the secondary battery includes an electrode assembly including a first electrode and a second electrode having a polarity different from a polarity of the first electrode, a case that accommodates the electrode assembly, a first tab group in which a plurality of first electrode tabs each electrically connected to the first electrode are stacked, and a first current collector connected to the first tab group, the first current collector is a first stack in which a plurality of metal plates are stacked, the first current collector includes a first region and a second region, the first tab group is joined to the first region, another conductive member is joined to the second region, and the first current collector is bent between the first region and the second region, the method comprising: joining the first tab group to the first region; and bending the first current collector between the first region and the second region.
[15] The method of manufacturing the secondary battery according to [14], wherein the secondary battery includes a second tab group in which a plurality of second electrode tabs each electrically connected to the first electrode are stacked, and a second current collector connected to the second tab group, the second current collector is a second stack in which a plurality of metal plates are stacked, the second current collector includes a third region and a fourth region, the second tab group is joined to the third region, the other conductive member is joined to the fourth region, and the second current collector is bent between the third region and the fourth region.
[16] The method of manufacturing the secondary battery according to [15], comprising overlapping the first current collector to which the first tab group is connected with the second current collector to which the second tab group is connected and connecting the first current collector and the second current collector to the other conductive member.
[17] The method of manufacturing the secondary battery according to any one of [14] to [16], comprising ultrasonically joining the first tab group to the first region in a region in which the metal plates are joined together.
[18] The method of manufacturing the secondary battery according to any one of [14] to [17], comprising joining the second region to the other conductive member by application of an energy ray before the bending.
[19] The method of manufacturing the secondary battery according to [18], wherein the other conductive member is joined to the second region in a region in which the metal plates are joined together.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a front view showing a configuration of a secondary battery according to a first embodiment.
Fig. 2 is a diagram showing a state in which the secondary battery shown in Fig. 1 is viewed in a direction of arrow II.
Fig. 3 is a diagram showing a state in which the secondary battery shown in Fig. 1 is viewed in a direction of arrow III.
Fig. 4 is a diagram showing a state in which the secondary battery shown in Fig. 1 is viewed in a direction of arrow IV.
Fig. 5 is a diagram showing a state in which the secondary battery shown in Fig. 1 is viewed in a direction of arrow V.
Fig. 6 is a front cross sectional view of the secondary battery shown in Fig. 1. Fig. 7 is a cross sectional view of a negative electrode (cross sectional view along VII-VII in Fig. 8).
Fig. 8 is a front view showing the negative electrode.
Fig. 9 is a cross sectional view of a positive electrode (cross sectional view along IX-IX in Fig. 10).
Fig. 10 is a front view showing the positive electrode.
Fig. 11 is a diagram showing a configuration around a negative electrode current collector.
Fig. 12 is a diagram showing a configuration around a positive electrode current collector.
Fig. 13 is a flowchart showing a method of manufacturing the secondary battery.
Fig. 14 is a diagram showing a state in which the current collectors are joined to a first electrode assembly and a second electrode assembly .
Fig. 15 is a diagram showing a state in which a sealing plate is assembled to a current collector on the negative electrode side.
Fig. 16 is a diagram showing a state in which the first electrode assembly and the second electrode assembly are overlapped with each other.
Fig. 17 is a diagram showing a step of inserting the first electrode assembly and the second electrode assembly into a case main body.
Fig. 18 is a diagram showing a state in which a sealing plate is assembled to a current collector on the positive electrode side.
Fig. 19 is a diagram showing a state in which an opening of the case main body is sealed.
Fig. 20 is a diagram showing a metal plate of the current collector.
Fig. 21 is a plan view of a current collector (first current collector) according to a second embodiment.
Fig. 22 is a side view of the current collector in a state before joining in the second embodiment.
Fig. 23 is a side view of the current collector in a state after joining in the second embodiment.
Fig. 24 is a plan view of the current collector after joining stacked metal plates in the second embodiment.
Fig. 25 is a cross sectional view taken along a line XXV-XXV in Fig. 24.
Fig. 26 is a cross sectional view taken along a line XXVI-XXVI in Fig. 24.
Fig. 27 is a cross sectional view taken along a line XXVII-XXVII in Fig. 24.
Fig. 28 is a developed view showing a state in which the current collector is connected to the positive electrode tab group and the positive electrode current collector.
Fig. 29 is a cross sectional view taken along a line XXIX-XXIX in Fig. 28.
Fig. 30 is a cross sectional view taken along a line XXX-XXX in Fig. 28.
Fig. 31 is a cross sectional view taken along a line XXXI-XXXI in Fig. 28.
Fig. 32 is a cross sectional view of a modification corresponding to the cross section taken along line XXXI-XXXI in Fig. 28.
Fig. 33 is a perspective view showing a state before the sealing plate on the positive electrode side is attached to the case in a third embodiment.
Fig. 34 is a plan view showing a current collector according to the third embodiment.
Fig. 35 is a cross sectional view taken along a line XXXV-XXXV in Fig. 34.
Fig. 36 is a cross sectional view taken along a line XXXVI-XXXVI in Fig. 34.
Fig. 37 is a cross sectional view taken along a line XXXVII-XXXVII in Fig. 34.
Fig. 38 is a plan view showing the current collector according to the third embodiment.
Fig. 39 is a developed view showing a state in which the current collector according to the third embodiment is connected to the positive electrode tab group and the positive electrode current collector.
Fig. 40 is a cross sectional view taken along a line XL-XL in Fig. 39.
Fig. 41 is a cross sectional view taken along a line XLI-XLI in Fig. 39.
Fig. 42 is a cross sectional view taken along a line XLII-XLII in Fig. 39.
Fig. 43 is a diagram showing a form of a first shape-modified current collector according to the fourth embodiment.
Fig. 44 is a diagram showing a form of a second shape-modified current collector according to the fourth embodiment.
Fig. 45 is a diagram showing a form of a third shape-modified current collector according to the fourth embodiment.
Fig. 46 is a diagram showing a form of a fourth shape-modified current collector according to the fourth embodiment.
Fig. 47 is a diagram showing a form of a fifth shape-modified current collector according to the fourth embodiment.
Fig. 48 is a schematic cross sectional view showing an effect in the case of using each of fourth and fifth shape-modified current collectors according to the fourth embodiment.
Fig. 49 is a cross sectional view taken along a line XLIX-XLIX in Fig. 43 in a fifth embodiment.
Fig. 50 is a cross sectional view corresponding to the cross section taken along line XLIX-XLIX in Fig. 43 in the fifth embodiment.
Fig. 51 is a first developed view showing a state in which the current collector is connected to the positive electrode tab group and the positive electrode current collector.
Fig. 52 is a second developed view showing a state in which the current collector is connected to the positive electrode tab group and the positive electrode current collector.
Fig. 53 is a side view showing a configuration of stacked metal plates.
Fig. 54 is a side view of a state in which the stacked metal plates are bent.
Fig. 55 is a side view showing a state in which the two current collectors and the two tab groups are arranged in the order of the first current collector, the first tab group, the second current collector, and the second tab group.
Fig. 56 is a side view showing a state in which the two current collectors and the two tab groups are arranged in the order of the first current collector, the first tab group, the second tab group, and the second current collector.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

In the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

In the present specification, the terms "comprise", "include", and "have" are open-end terms. That is, when a certain configuration is included, a configuration other than the foregoing configuration may or may not be included.

In the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "secondary battery" may include a lithium ion battery as well as a nickel-metal hydride battery, a sodium-ion battery, and the like. In the present specification, the term "electrode" may collectively represent a positive electrode and a negative electrode.

In the figures, when an electrode assembly included in the secondary battery is a stacked type electrode assembly, an X direction is defined as a long-side direction of a stacked surface, whereas when the electrode assembly is a wound type electrode assembly, the X direction is defined as a direction along a winding axis thereof. Further, a Y direction is defined as a short-side direction of the electrode assembly when viewed in the X direction, and a Z direction is defined as a long-side direction of the electrode assembly when viewed in the X direction. In order to facilitate understanding of the invention, the size of each configuration in the figures may be illustrated to be changed from its actual size.

In the present specification, the X direction may be referred to as a "width direction" of each of a secondary battery 1, an electrode assembly 200, and a case main body 110, the Z direction may be referred to as a "height direction" of each of secondary battery 1, electrode assembly 200, and case main body 110, and the Y direction may be referred to as a "thickness direction" of each of secondary battery 1, electrode assembly 200, and case main body 110.

### (First Embodiment: Overall Configuration of Battery)

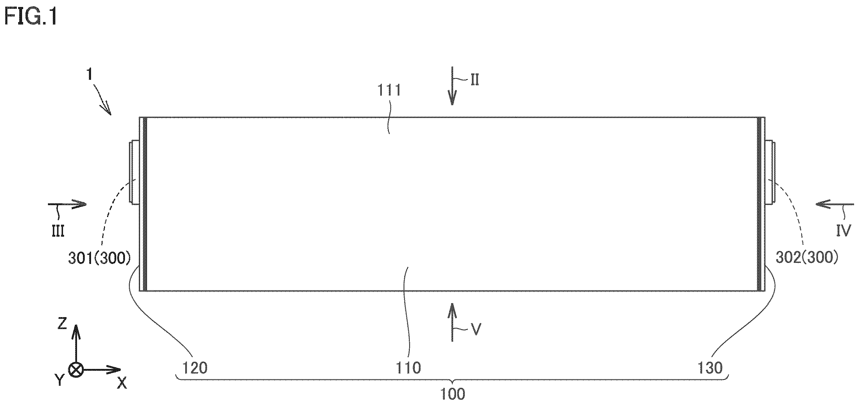

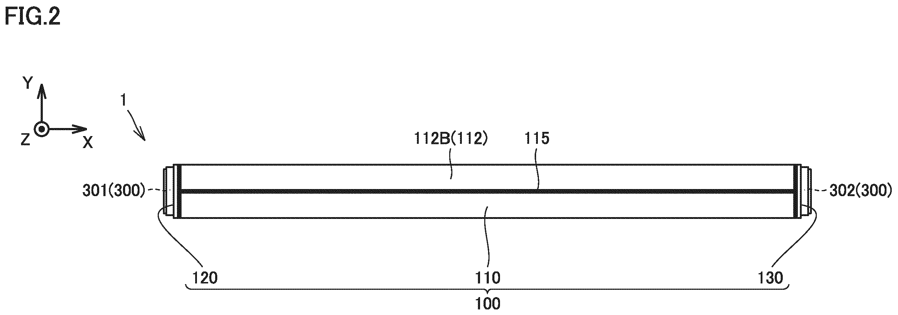

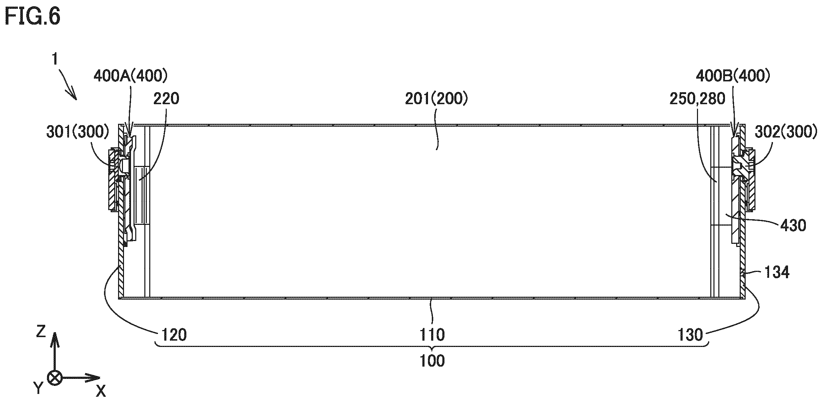

Fig. 1 is a front view of a secondary battery 1 according to a first embodiment. Figs. 2 to 5 are diagrams showing states of secondary battery 1 shown in Fig. 1 when viewed in directions of arrows II, III, IV, and V respectively. Fig. 6 is a front cross sectional view of secondary battery 1 shown in Fig. 1.

Secondary battery 1 can be mounted on a battery electric vehicle (BEV), a plug-in hybrid electric vehicle (PHEV), a hybrid electric vehicle (HEV), or the like. It should be noted that the purpose of use of secondary battery 1 is not limited to the use on a vehicle.

As shown in Figs. 1 to 6, secondary battery 1 includes a case 100, an electrode assembly 200, electrode terminals 300, and current collectors 400. Case 100 includes case main body 110, a sealing plate 120, and a sealing plate 130.

When forming a battery assembly including secondary battery 1, a plurality of secondary batteries 1 are arranged in the thickness direction of each of the plurality of secondary batteries 1. Secondary batteries 1 arranged may be restrained in the arrangement direction (Y direction) by a restraint member to form a battery module, or the battery assembly may be directly supported by a side surface of a case of a battery pack without using the restraint member.

Case main body 110 is constituted of a member having a tubular shape, preferably, a prismatic tubular shape. Thus, secondary battery 1 having a prismatic shape is obtained. Case main body 110 is composed of a metal. Specifically, case main body 110 is composed of aluminum, an aluminum alloy, iron, an iron alloy, or the like.

As shown in Figs. 1 and 2, sealing plate 120 and sealing plate 130 are provided at respective end portions of case main body 110. Case main body 110 can be formed to have a prismatic tubular shape in, for example, the following manner: end sides of a plate-shaped member having been bent are brought into abutment with each other (joining portion 115 illustrated in Fig. 2) and are joined together (for example, laser welding). Each of the corners of the "prismatic tubular shape" may have a shape with a curvature. Moreover, the secondary battery in the present technology is not necessarily limited to the prismatic secondary battery.

In the present embodiment, case main body 110 is formed to be longer in the width direction (X direction) of secondary battery 1 than in each of the thickness direction (Y direction) and the height direction (Z direction) of secondary battery 1. The size (width) of case main body 110 in the X direction is preferably about 30 cm or more. In this way, secondary battery 1 can be formed to have a relatively large size (high capacity). The size (height) of case main body 110 in the Z direction is preferably about 20 cm or less, more preferably about 15 cm or less, and further preferably about 10 cm or less. Thus, (low-height) secondary battery 1 having a relatively low height can be formed, thus resulting in improved ease of mounting on a vehicle, for example.

Case main body 110 includes a pair of first side surface portions 111 and a pair of second side surface portions 112. The pair of first side surface portions 111 constitute parts of the side surfaces of case 100. The pair of second side surface portions 112 constitute the bottom surface portion and upper surface portion of case 100. The pair of first side surface portions 111 and the pair of second side surface portions 112 are provided to intersect each other. The pair of first side surface portions 111 and the pair of second side surface portions 112 are connected at their respective end portions. Each of the pair of first side surface portions 111 has an area larger than that of each of the pair of second side surface portions 112.

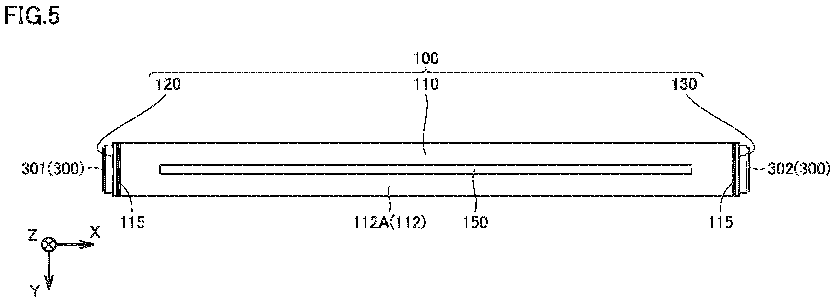

As shown in Fig. 5, a gas-discharge valve 150 is provided in one second side surface portion 112A of the pair of second side surface portions 112. Gas-discharge valve 150 extends in the width direction (X direction) of secondary battery 1. Gas-discharge valve 150 extends from the center of case main body 110 in the X direction to such an extent that gas-discharge valve 150 does not reach both ends of case main body 110 in the X direction. The shape of gas-discharge valve 150 can be changed appropriately.

The thickness of the plate-shaped member in gas-discharge valve 150 is thinner than the thickness of the plate-shaped member of case main body 110 other than gas-discharge valve 150. Thus, when the pressure in case 100 becomes equal to or more than a predetermined value, gas-discharge valve 150 is fractured prior to the other portions of case main body 110, thereby discharging the gas in case 100 to the outside.

As shown in Fig. 2, joining portion 115 is formed at the other second side surface portion 112B of the pair of second side surface portions 112. Joining portion 115 extends in the width direction (X direction) of secondary battery 1. At joining portion 115, the end sides of the plate-shaped member constituting case main body 110 are joined to each other.

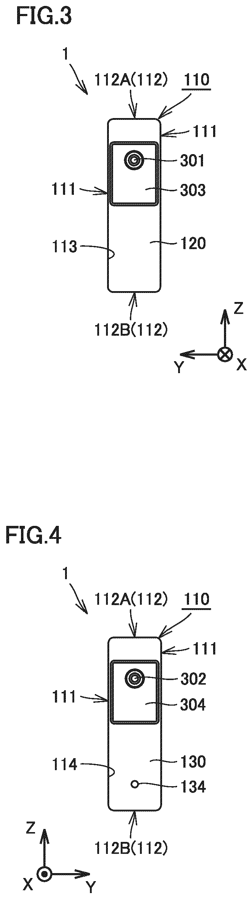

As shown in Fig. 3, an opening 113 (second opening) is provided at an end portion of case main body 110 on the -X side in the X direction. Opening 113 is sealed by sealing plate 120 (second sealing plate). Joining portion 115 is formed at opening 113 so as to seal opening 113. Each of opening 113 and sealing plate 120 has a substantially rectangular shape in which the Y direction corresponds to its short-side direction and the Z direction corresponds to its long-side direction. The substantially rectangular shape includes a rectangular shape or a generally rectangular shape such as a rectangular shape having corners each with a curvature.

A negative electrode terminal 301 (second electrode terminal) is provided on sealing plate 120. The position of negative electrode terminal 301 can be appropriately changed. Negative electrode terminal 301 is exposed to the outside of sealing plate 120.

As shown in Fig. 4, an opening 114 (first opening) is provided at an end portion of case main body 110 on the +X side in the X direction. Opening 114 is located at an end portion opposite to opening 113, and openings 113, 114 face each other. Opening 114 is sealed by sealing plate 130 (first sealing plate). Joining portion 115 is formed at opening 114 so as to seal opening 114. Each of opening 114 and sealing plate 130 has a substantially rectangular shape in which the Y direction corresponds to its short-side direction and the Z direction corresponds to its long-side direction.

Sealing plate 130 is provided with a positive electrode terminal 302 (first electrode terminal) and an injection hole 134. The positions of positive electrode terminal 302 and injection hole 134 can be appropriately changed.

Each of sealing plate 120 and sealing plate 130 is composed of a metal. Specifically, each of sealing plate 120 and sealing plate 130 is composed of aluminum, an aluminum alloy, iron, an iron alloy, or the like.

Negative electrode terminal 301 is electrically connected to a negative electrode of electrode assembly 200. Negative electrode terminal 301 is attached to sealing plate 120, i.e., case 100. Negative electrode terminal 301 is composed of a conductive material (more specifically, a metal), and can be composed of copper, a copper alloy, or the like, for example. A portion or layer composed of aluminum or an aluminum alloy may be provided at a portion of an outer surface of negative electrode terminal 301. Negative electrode terminal 301 is connected to a plate-shaped member 303.

Plate-shaped member 303 is located on the outer side with respect to sealing plate 120. Plate-shaped member 303 is disposed along sealing plate 120. Plate-shaped member 303 has electric conductivity. Plate-shaped member 303 is disposed to secure an area of connection with a bus bar or the like that electrically connects secondary battery 1 and another secondary battery adjacent thereto. The connection between negative electrode terminal 301 and plate-shaped member 303 can be formed by, for example, laser welding or the like.

Positive electrode terminal 302 is electrically connected to a positive electrode of electrode assembly 200. Positive electrode terminal 302 is attached to sealing plate 130, i.e., case 100. Positive electrode terminal 302 is composed of a conductive material (more specifically, a metal), and can be composed of aluminum, an aluminum alloy, or the like, for example. Positive electrode terminal 302 is exposed to the outside of sealing plate 130. Positive electrode terminal 302 is connected to a plate-shaped member 304.

Plate-shaped member 304 is located on the outer side with respect to sealing plate 130. Plate-shaped member 304 is disposed along sealing plate 130. Plate-shaped member 304 has electric conductivity. Plate-shaped member 304 is disposed to secure an area of connection with a bus bar or the like that electrically connects secondary battery 1 and another secondary battery adjacent thereto. The connection between positive electrode terminal 302 and plate-shaped member 304 can be formed by, for example, laser welding or the like.

Injection hole 134 is sealed by a sealing member (not shown). As the sealing member, for example, a blind rivet or another metal member can be used.

Electrode assembly 200 is an electrode assembly having a flat shape and having a below-described positive electrode and a below-described negative electrode stacked on each other. Specifically, electrode assembly 200 is, for example, a stacked type electrode assembly in which a plurality of positive electrodes and a plurality of negative electrodes are alternately stacked with separators (not shown) being interposed therebetween. However, in the present specification, the "electrode assembly" is not limited to the stacked type electrode assembly, and may be a wound type electrode assembly in which a strip-shaped positive electrode and a strip-shaped negative electrode are wound together with a strip-shaped separator being interposed therebetween. The separator can be constituted of, for example, a microporous membrane composed of polyolefin. When the electrode assembly is the stacked type electrode assembly including the plurality of positive electrodes and the plurality of negative electrodes, positive electrode tabs provided on the positive electrodes can be stacked to form a positive electrode tab group, and negative electrode tabs provided on the negative electrodes can be stacked to form a negative electrode tab group.

As shown in Fig. 6, case 100 accommodates electrode assembly 200. Fig. 6 illustrates a first electrode assembly 201 described below. First electrode assembly 201 is accommodated in case 100 such that the long-side direction thereof is parallel to the X direction.

Specifically, one or a plurality of the stacked type electrode assemblies and an electrolyte solution (electrolyte) (not shown) are accommodated inside an insulating sheet (not shown) disposed in case 100. Instead of the electrolyte solution, a solid electrolyte may be used.

First electrode assembly 201 includes a main body portion having a substantially rectangular shape, a negative electrode tab group 220, and a positive electrode tab group 250. Negative electrode tab group 220 is located at an end portion of first electrode assembly 201 on the -X side with respect to the main body portion thereof in the X direction. Positive electrode tab group 250 is located at an end portion of first electrode assembly 201 on the +X side with respect to the main body portion thereof in the X direction.

Each of negative electrode tab group 220 and positive electrode tab group 250 is formed to protrude from a central portion of electrode assembly 200 toward sealing plate 120 or sealing plate 130.

Current collectors 400 include a negative electrode current collector 400A and a positive electrode current collector 400B. Electrode assembly 200 is electrically connected to negative electrode terminal 301 and positive electrode terminal 302 through current collectors 400.

Negative electrode current collector 400A is electrically connected to negative electrode tab group 220 and negative electrode terminal 301. Negative electrode current collector 400A can be composed of a conductive material (more specifically, a metal such as copper or a copper alloy).

Positive electrode current collector 400B is electrically connected to positive electrode tab group 250 and positive electrode terminal 302. Positive electrode current collector 400B can be composed of a conductive material (more specifically, a metal such as aluminum or an aluminum alloy).

### (Configuration of Electrode Assembly 200)

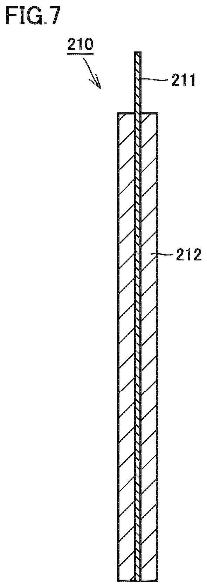

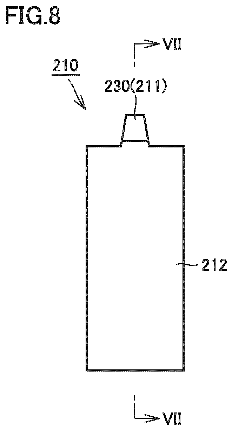

As shown in Figs. 7 and 8, negative electrode 210 includes a negative electrode core body 211 and a negative electrode active material layer 212. Negative electrode core body 211 is a copper foil or a copper alloy foil. Negative electrode active material layer 212 is formed by applying a negative electrode active material layer slurry using a die coater.

A negative electrode tab 230 constituted of negative electrode core body 211 is provided at one end portion, in the width direction, of negative electrode 210. When negative electrodes 210 are stacked, a plurality of negative electrode tabs 230 are stacked to form negative electrode tab group 220. The length of each of the plurality of negative electrode tabs 230 in the plurality of negative electrodes 210 in the protruding direction is appropriately adjusted in consideration of the state in which negative electrode tab group 220 is connected to negative electrode current collector 400A. The shape of negative electrode tab 230 is not limited to the one illustrated in Fig. 8.

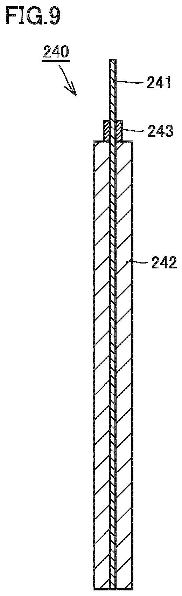

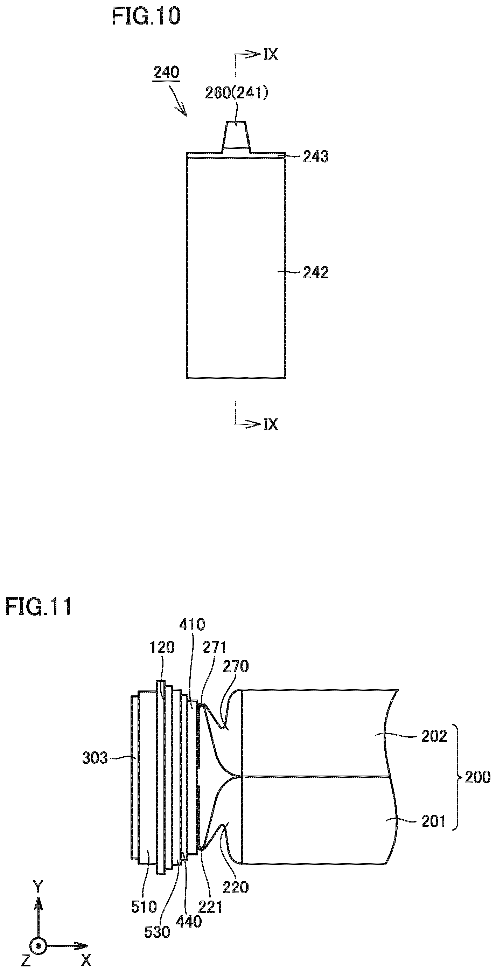

As shown in Figs. 9 and 10, positive electrode 240 has a polarity different from a polarity of negative electrode 210. Positive electrode 240 includes a positive electrode core body 241, a positive electrode active material layer 242, and a positive electrode protective layer 243. Positive electrode core body 241 is an aluminum foil or an aluminum alloy foil. Positive electrode active material layer 242 is formed on positive electrode core body 241 by applying a positive electrode active material layer slurry using a die coater.

A positive electrode tab 260 constituted of positive electrode core body 241 is provided at one end portion, in the width direction, of positive electrode 240. When positive electrodes 240 are stacked, a plurality of positive electrode tabs 260 are stacked to form positive electrode tab group 250. The length of each of positive electrode tabs 260 in the plurality of positive electrodes 240 in the protruding direction is appropriately adjusted in consideration of the state in which positive electrode tab group 250 is connected to positive electrode current collector 400B. The shape of positive electrode tab 260 is not limited to the one illustrated in Fig. 10.

Positive electrode protective layer 243 is provided at the root of positive electrode tab 260. It should be noted that positive electrode protective layer 243 may not necessarily be provided.

In a typical example, the thickness of (one) negative electrode tab 230 is smaller than the thickness of (one) positive electrode tab 260. In this case, the thickness of negative electrode tab group 220 is smaller than the thickness of positive electrode tab group 250.

(Connection Structure between Electrode Assembly 200 and Current Collector 400)

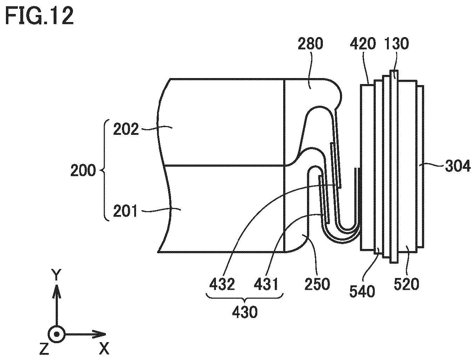

As shown in Figs. 11 and 12, electrode assembly 200 includes first electrode assembly 201 and a second electrode assembly 202. Each of first electrode assembly 201 and second electrode assembly 202 includes positive electrode 240 and negative electrode 210. Electrode assembly 200 may be constituted of three or more electrode assemblies.

Electrode assembly 200 is formed by overlapping first electrode assembly 201 and second electrode assembly 202 with each other. First electrode assembly 201 and second electrode assembly 202 are arranged side by side in the thickness direction (Y direction) of each of first electrode assembly 201 and second electrode assembly 202.

First electrode assembly 201 includes positive electrode tab group 250 (first electrode tab) disposed at an end portion (Fig. 12) of first electrode assembly 201 on one side and electrically connected to positive electrode 240, and negative electrode tab group 220 (second electrode tab) disposed at an end portion (Fig. 11) of first electrode assembly 201 on the other side and electrically connected to negative electrode 210.

Second electrode assembly 202 includes a positive electrode tab group 280 (third electrode tab) disposed at an end portion (Fig. 12) of second electrode assembly 202 on one side and electrically connected to positive electrode 240, and a negative electrode tab group 270 (fourth electrode tab) disposed at an end portion (Fig. 11) of second electrode assembly 202 on the other side and electrically connected to negative electrode 210.

As shown in Fig. 11 (structure on the negative electrode side), negative electrode tab groups 220, 270 are electrically connected to a current collector 410 (negative electrode current collector 400A). Current collector 410 (second current collector) to which negative electrode tab group 220 and negative electrode tab group 270 are joined can be constituted of a plate-shaped member composed of a metal. Moreover, current collector 410 may be constituted of a single member.

Negative electrode tab group 220 has a curved portion 221. Curved portion 221 is a portion at which negative electrode tab group 220 is curved. Negative electrode tab group 270 has a curved portion 271. Curved portion 271 is a portion at which negative electrode tab group 270 is curved.

Negative electrode tab group 220 and negative electrode tab group 270 are curved in opposite directions such that their tip portions come close to each other.

Moreover, the tip portions of negative electrode tab group 220 and negative electrode tab group 270 are separated from each other in the present embodiment; however, the present technology is not limited to this configuration, and the tip portions of negative electrode tab group 220 and negative electrode tab group 270 may be in contact with each other.

Current collector 410 electrically connects negative electrode terminal 301 to negative electrode tab group 220 and negative electrode tab group 270. Current collector 410 has a long-side direction in the Z direction and a short-side direction in the Y direction.

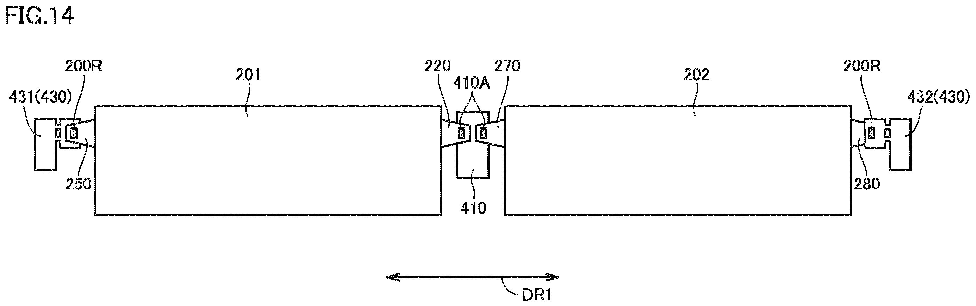

Each of negative electrode tab group 220 and negative electrode tab group 270 is joined to current collector 410 at a below-described joining portion 410A (see Fig. 14). Joining portion 410A can be formed by, for example, ultrasonic joining, resistance welding, laser welding, swaging, or the like.

An insulating member 510 is disposed between plate-shaped member 303 and sealing plate 120. An insulating member 530 is disposed between current collector 410 and sealing plate 120. It should be noted that negative electrode terminal 301 may be electrically connected to sealing plate 120, and sealing plate 120 may function as negative electrode terminal 301.

A spacer (not shown) may be disposed between sealing plate 120 and the main body portion (each of negative electrode tab groups 220, 270 is not included) of electrode assembly 200. The spacer can be composed of a resin member having an insulating property. Each of negative electrode tab groups 220, 270 passes internal to the spacer, thereby protecting each of negative electrode tab groups 220, 270.

As shown in Fig. 12 (structure on the positive electrode side), positive electrode tab group 250 and positive electrode tab group 280 are electrically connected to current collectors 430 (positive electrode current collector 400B). More specifically, positive electrode tab group 250 is joined to a current collector 431, and positive electrode tab group 280 is joined to a current collector 432.

The lengths of positive electrode tab groups 250, 280 can be appropriately changed. The lengths of positive electrode tab groups 250, 280 are preferably the same, but may be different from each other. The length of each of positive electrode tab groups 250, 280 may be shorter than that of each of negative electrode tab groups 220, 270 or may be longer than that of each of negative electrode tab groups 220, 270.

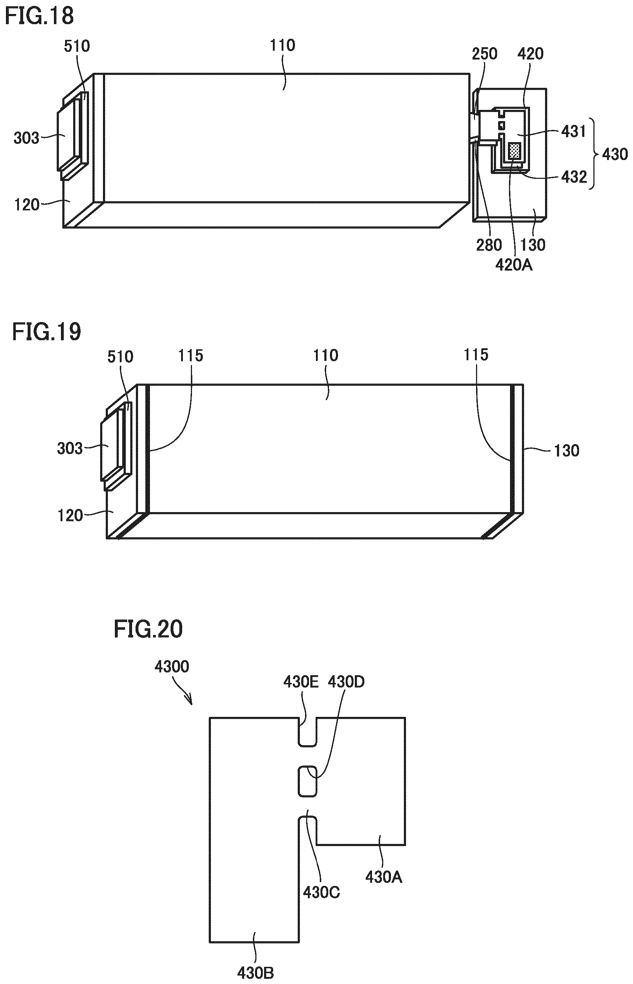

Current collector 431 (first current collector) to which positive electrode tab group 250 is joined is constituted of a stack (first stack) in which a plurality of metal plates 4300 (see Fig. 20) described later are stacked. Similarly, current collector 432 (third current collector) to which positive electrode tab group 280 is joined is constituted of a stack (second stack) in which a plurality of metal plates 4300 (see Fig. 20) are stacked. In each of current collectors 431, 432, the number of metal plates 4300 stacked is 2 or more, is preferably, for example, 3 or more, and is more preferably 5 or more. Further, for example, the number of metal plates 4300 stacked can be 20 or less, is preferably 15 or less, and is more preferably 10 or less. It should be noted that the same can be applied to a case where a current collector in which metal plates are stacked is used on the negative electrode side.

Current collectors 431, 432 electrically connect positive electrode terminal 302 to positive electrode tab group 250 and positive electrode tab group 280. Each of current collectors 431, 432 is joined to a positive electrode current collection portion 420 in a bent state, and is electrically connected to positive electrode terminal 302.

Since current collectors 430 are constituted of two separate current collectors 431, 432, a more stable current collecting structure can be formed. However, the scope of the present technology is not limited thereto, and positive electrode tab group 250 and positive electrode tab group 280 may be joined to one current collector 430, for example. By joining positive electrode tab group 250 and positive electrode tab group 280 to one current collector 430, the joining step can be simplified (the number of times of performing the joining step can be reduced).

In the example of Fig. 12, current collectors 431, 432 and positive electrode current collection portion 420 are joined together at a portion (joining region 420A in Fig. 18) at which current collectors 431, 432 are overlapped with each other. It should be noted that the scope of the present technology is not limited thereto, and current collectors 431, 432 may be joined to positive electrode current collection portion 420 at positions separated from or adjacent to each other in positive electrode current collection portion 420.

Positive electrode tab group 250 and positive electrode tab group 280 are respectively joined to current collectors 431, 432 at positive electrode joining regions 200R (see Fig. 14) described later. Each of positive electrode joining regions 200R can be formed by, for example, ultrasonic joining, resistance welding, laser welding, swaging, or the like.

Positive electrode joining region 200R between current collector 431 and positive electrode tab group 250 and positive electrode joining region 200R between current collector 432 and positive electrode tab group 280 are formed at positions separated from each other on the X-Y plane.

As shown in Fig. 12, positive electrode tab group 250 is disposed between an end portion of current collector 431 on the electrode assembly 200 side (left side in the figure) and an end portion of current collector 432 on the electrode assembly 200 side (left side in the figure) in the X direction (clearance between current collectors 431, 432). Positive electrode tab group 280 may be disposed in the clearance between current collectors 431, 432, or both positive electrode tab groups 250, 280 may be disposed in the clearance between current collectors 431, 432. Thus, the clearance between current collectors 431, 432 can be effectively utilized.

An insulating member 520 is disposed between plate-shaped member 304 and sealing plate 130. An insulating member 540 is disposed between positive electrode terminal 302 and sealing plate 130. It should be noted that positive electrode terminal 302 may be electrically connected to sealing plate 130, and sealing plate 130 may function as positive electrode terminal 302.

A spacer (not shown) may be disposed between sealing plate 130 and the main body portion (positive electrode tab groups 250, 280 are not included) of electrode assembly 200. The spacer can be composed of a resin member having an insulating property. Since each of positive electrode tab groups 250, 280 passes internal to spacer 600, each of positive electrode tab groups 250, 280 is protected.

### (Manufacturing Process for Secondary Battery 1)

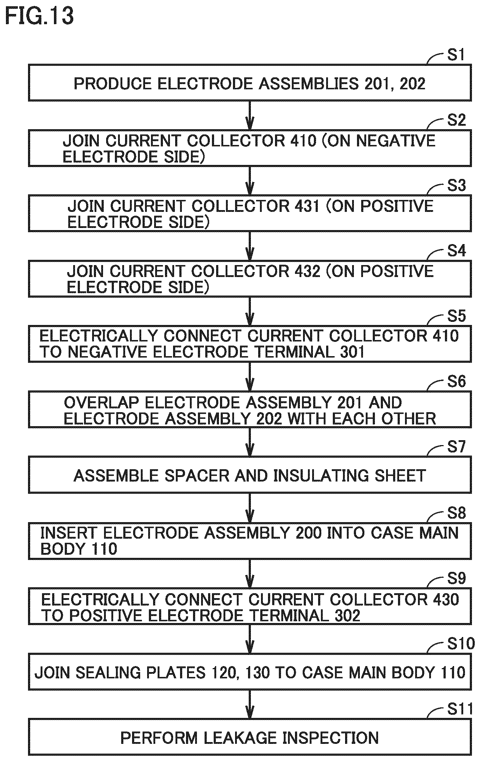

Hereinafter, a method of manufacturing the secondary battery according to the present embodiment will be described. Fig. 13 is a flowchart showing a method of manufacturing secondary battery 1.

As shown in Fig. 13, the method of manufacturing secondary battery 1 includes: a step (S1) of producing first electrode assembly 201 and second electrode assembly 202; a step (S2) of joining negative electrode tab group 220 and negative electrode tab group 270 to current collector 410; a step (S3) of joining positive electrode tab group 250 to current collector 431; a step (S4) of joining positive electrode tab group 280 to current collector 432; a step (S5) of electrically connecting, to negative electrode terminal 301, current collector 410 joined to negative electrode tab group 220 and negative electrode tab group 270; a step (S6) of overlapping first electrode assembly 201 and second electrode assembly 202 with each other; a step (S7) of assembling the spacer and the insulating sheet to electrode assembly 200; a step (S8) of inserting first electrode assembly 201 and second electrode assembly 202 into case main body 110; a step (S9) of electrically connecting, to positive electrode terminal 302, current collectors 431, 432 joined to positive electrode tab groups 250, 280; a step (S10) of joining sealing plates 120, 130 to case main body 110 so as to seal openings 113, 114; and a step (S11) of performing a leakage inspection.

Each of Figs. 14 to 19 is a diagram showing a step in the method of manufacturing secondary battery 1.

In the step (S1) of producing first electrode assembly 201 and second electrode assembly 202, parts of the tips of negative electrode tab group 220, positive electrode tab group 250, negative electrode tab group 270, and positive electrode tab group 280 are preferably cut such that they have the same tip length when bundled.

As shown in Fig. 14, after producing first electrode assembly 201 and second electrode assembly 202, negative electrode tab groups 220, 270 are joined to current collector 410 (S2), positive electrode tab group 250 is joined to current collector 431 (S3), and positive electrode tab group 280 is joined to current collector 432 (S4).

Each of negative electrode tab groups 220, 270 is joined to current collector 410 at joining portion 410A. Positive electrode tab group 250 is joined to current collector 431 at positive electrode joining region 200R. Positive electrode tab group 280 is joined to current collector 432 at positive electrode joining region 200R.

Current collector 431, first electrode assembly 201, current collector 410, second electrode assembly 202, and current collector 432 are arranged side by side in this order in a direction of arrow DR1.

In the example of Fig. 14, in the height direction of each of first electrode assembly 201 and second electrode assembly 202, each of current collector 410 and current collectors 431, 432 is disposed on one side with respect to the center of a corresponding one of first electrode assembly 201 and second electrode assembly 202. Moreover, in the height direction of each of first electrode assembly 201 and second electrode assembly 202, each of negative electrode tab group 220, positive electrode tab group 250, negative electrode tab group 270, and positive electrode tab group 280 is disposed on one side with respect to the center of a corresponding one of first electrode assembly 201 and second electrode assembly 202.

It should be noted that the scope of the present technology is not limited thereto, and in the height direction of each of first electrode assembly 201 and second electrode assembly 202, each of current collectors 410 and current collectors 431, 432 may be disposed at the center of a corresponding one of first electrode assembly 201 and second electrode assembly 202. Moreover, in the height direction of each of first electrode assembly 201 and second electrode assembly 202, each of negative electrode tab group 220, positive electrode tab group 250, negative electrode tab group 270, and positive electrode tab group 280 may be disposed at the center of a corresponding one of first electrode assembly 201 and second electrode assembly 202.

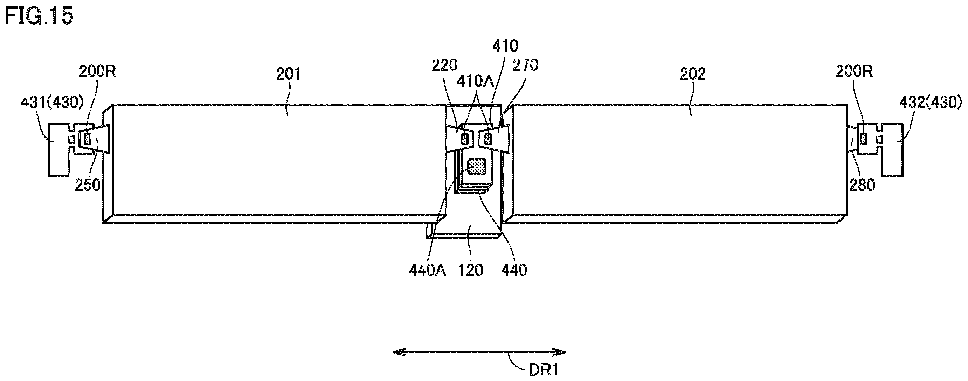

As shown in Fig. 15, current collector 410 joined to negative electrode tab group 220 and negative electrode tab group 270 is assembled to sealing plate 120. Current collector 440 and negative electrode terminal 301 are attached to sealing plate 120 in advance. Current collector 410 is assembled to sealing plate 120 with current collector 440 being interposed therebetween. Current collector 410 is joined to current collector 440 at a joining portion 440A. Joining portion 440A can be formed by laser welding or the like, for example. As a result, current collector 410 is electrically connected to negative electrode terminal 301 (S5).

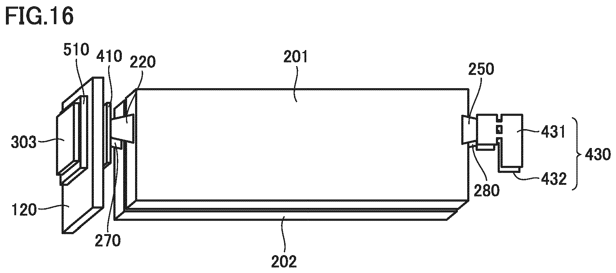

As shown in Fig. 16, negative electrode tab group 220 and negative electrode tab group 270 are bent in the thickness direction of each of first electrode assembly 201 and second electrode assembly 202 (direction orthogonal to the DR1 direction in Figs. 14 and 15) so as to overlap first electrode assembly 201 and second electrode assembly 202 with each other (S6). Here, negative electrode tab group 220 and negative electrode tab group 270 are bent such that their tip portions face each other.

When "overlapping" first electrode assembly 201 and second electrode assembly 202 with each other, first electrode assembly 201 and second electrode assembly 202 may be overlapped with each other directly, or another member may be disposed between first electrode assembly 201 and second electrode assembly 202. Further, first electrode assembly 201 and second electrode assembly 202 may or may not be fixed by a tape or the like.

The spacer and the insulating sheet are assembled to electrode assembly 200 (S7). It should be noted that the spacer and the insulating sheet are not necessarily essential in the present technology. The insulating sheet does not necessarily need to cover the entire surface of electrode assembly 200. When electrode assembly 200 is covered with the insulating sheet, the spacer is preferably also covered with the insulating sheet.

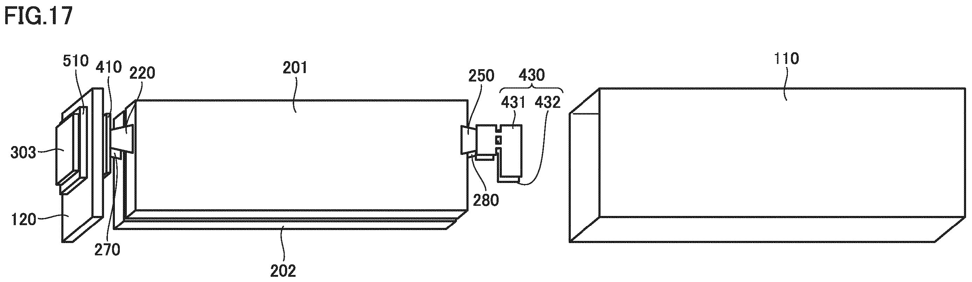

As shown in Fig. 17, first electrode assembly 201 and second electrode assembly 202 overlapped with each other are inserted into case main body 110 with the current collector 430 side being inserted first (S8).

When inserting electrode assembly 200 into case main body 110, electrode assembly 200 may be pulled from the positive electrode side, or may be pushed from the negative electrode side. When electrode assembly 200 is pushed from the negative electrode side, negative electrode tab group 220 and negative electrode tab group 270 can be curved at the same time.

As shown in Fig. 18, after electrode assembly 200 is inserted into case main body 110, each of current collectors 430 joined to positive electrode tab group 250 and positive electrode tab group 280 is assembled to sealing plate 130. Positive electrode current collection portion 420 and positive electrode terminal 302 are attached to sealing plate 130 in advance. Current collector 430 is assembled to sealing plate 130 with positive electrode current collection portion 420 being interposed therebetween. Current collector 410 is joined to positive electrode current collection portion 420 at joining region 420A. Joining region 420A can be formed by laser welding or the like, for example. As a result, current collector 430 is electrically connected to positive electrode terminal 302 (S9).

Current collectors 431, 432 joined to positive electrode tab groups 250, 280 are electrically connected to positive electrode terminal 302, and are then bent into the shape shown in Fig. 12 together with positive electrode tab groups 250, 280. Current collectors 431, 432 are preferably bent at the same time, but current collectors 431, 432 may be bent sequentially.

As shown in Fig. 19, sealing plates 120, 130 are joined to case main body 110 (step S10). Sealing plate 120 seals opening 113 of case main body 110, and sealing plate 130 seals opening 114 of case main body 110. Thus, first electrode assembly 201 and second electrode assembly 202 are accommodated in case 100.

After the above-described steps, an inspection such as a leakage inspection is performed (step S11). After the leakage inspection, secondary battery 1 is dried to remove moisture in case 100. Then, the electrolyte solution is injected into case 100 through injection hole 134. When injecting the electrolyte solution, case 100 is inclined with sealing plate 130 facing upward and sealing plate 120 facing downward, thereby injecting the electrolyte solution into case 100 via injection hole 134 of sealing plate 130. Thereafter, charging is performed to result in release of gas. For performing the charging to result in release of gas, injection hole 134 may be temporarily sealed. Thereafter, injection hole 134 is sealed, thereby completing secondary battery 1.

The order of the step of inserting electrode assembly 200 and the step of connecting the current collectors is not limited to the above-described example. For example, the order of the steps (S2 to S4) of joining current collectors 410, 431, 432 can be appropriately changed.

In the present embodiment, it has been illustratively described that current collector 430 is electrically connected to positive electrode terminal 302 (S9) with first electrode assembly 201 and second electrode assembly 202 being completely disposed in case main body 110 after completing the step (S8) of inserting first electrode assembly 201 and second electrode assembly 202 into the main body of case 100; however, positive electrode terminal 302 and electrode assembly 200 may be electrically connected (S9) before completely ending the step (S8) of inserting electrode assembly 200 into case main body 110 (during the insertion step).

It has been illustratively described in the present embodiment that current collectors 431, 432 are bent after the step (S9) of electrically connecting current collectors 431, 432 to positive electrode terminal 302; however, current collectors 431, 432 may be deformed before the step (S9) of electrically connecting current collectors 431, 432 to positive electrode terminal 302.

### (Configuration of Metal Plate 4300)

As shown in Fig. 20, metal plate 4300 includes a first region 430A to be joined to positive electrode tab groups 250, 280, and a second region 430B to be joined to positive electrode current collection portion 420, as well as a connection portion 430C, a hole portion 430D, and a notch 430E, which are provided between first region 430A and second region 430B.

When forming current collector 430, the plurality of metal plates 4300 may be joined together at first region 430A and second region 430B (first portion). The plurality of metal plates 4300 are preferably joined together by ultrasonic joining, diffusion joining, or the like, for example. In the case of the diffusion joining, metal plates 4300 stacked are preferably joined together by applying pressure to stacked metal plates 4300 in a state in which stacked metal plates 4300 are heated at a temperature lower than the melting point of each of metal plates 4300. The plurality of metal plates 4300 are joined together before other conductive members (positive electrode tab groups 250, 280 and positive electrode current collection portion 420) are joined to first region 430A and second region 430B.

Connection portion 430C (second portion) of current collector 430 preferably includes a region at which the plurality of metal plates 4300 are not joined together. Thus, current collector 430 can be readily bent at connection portion 430C. The portion of each of metal plates 4300 to be bent preferably includes a region at which the plurality of metal plates 4300 are not to be joined together. Moreover, the plurality of metal plates 4300 are preferably not to be joined together at the whole of the portion of each of metal plates 4300 to be bent. Each of the regions (first region 430A and second region 430B) other than connection portion 430C may have a portion at which the plurality of metal plates 4300 are not to be joined together.

It should be noted that at the region at which metal plates 4300 are not joined together, metal plates 4300 may be in abutment with each other. Moreover, a slight clearance may be present between metal plates 4300. At the region at which metal plates 4300 are not joined together, metal plates 4300 are not welded or the like and there is therefore a clear boundary between metal plates 4300. For example, a natural oxide film is present on the surface of each metal plate 4300.

By providing hole portion 430D and notch 430E in connection portion 430C, the cross sectional area of connection portion 430C can be reduced to facilitate bending of current collector 430 at connection portion 430C. Moreover, connection portion 430C can also function as a fuse portion.

Each of metal plates 4300 can be composed of, for example, aluminum or an aluminum alloy. It should be noted that metal plate 4300 can also be composed of copper, a copper alloy, nickel, a nickel alloy, iron, or an iron alloy. The thickness of one metal plate 4300 is preferably larger than the thickness of one positive electrode tab 260, and is preferably about 3 times or more (more preferably about 5 times or more) as large as the thickness of one positive electrode tab 260. The thickness of one metal plate 4300 is preferably 0.05 mm or more, and is more preferably 0.08 mm or more, for example. Moreover, the thickness of one metal plate 4300 is preferably 0.5 mm or less, is more preferably 0.3 mm or less, and is further preferably 0.2 mm or less. It should be noted that the thickness of one metal plate 4300 is preferably 1/2 or less of the thickness of positive electrode current collection portion 420, and is more preferably 1/5 or less of the thickness of positive electrode current collection portion 420. It should be noted that the same can be applied to a case where a current collector in which metal plates are stacked is used on the negative electrode side.

The number of metal plates 4300 of each of current collectors 431, 432 can be appropriately changed. The total thickness (first thickness: T1) of each of current collectors 431, 432 is preferably larger than the total thickness (second thickness: T2) of each of positive electrode tab groups 250, 280 joined to current collectors 431, 432. T1/T2 is more preferably about 1.5 or more, and T1/T2 is further preferably about 2 or more.

It should be noted that the "total thickness of each of current collectors 431, 432" means the total thickness of portions of each of current collectors 431, 432 having no irregularities. Moreover, the "total thickness of each of positive electrode tab groups 250, 280" means the total thickness of portions thereof, at which each of positive electrode tab groups 250, 280 is provided, other than positive electrode joining region 200R.

In the present embodiment, current collector 430 constituted of the stack of the plurality of metal plates 4300 is used to provide current collector 430 that can be likely to be stably deformed while suppressing an increase in resistance. As a result, the size of positive electrode current collector 400B can be reduced to improve the energy density of secondary battery 1.

When each of current collectors 430 connected to positive electrode tab groups 250, 280 is electrically connected to positive electrode terminal 302 with first electrode assembly 201 and second electrode assembly 202 being disposed in case main body 110 and then current collector 430 is bent, secondary battery 1 having high energy density and high reliability can be more stably and efficiently manufactured because current collector 430 is constituted of the stack of the plurality of metal plates 4300.

In this case, negative electrode tab groups 220, 270 are particularly preferably joined to one surface of current collector 410 with negative electrode tab groups 220, 270 being curved as shown in Fig. 11. It should be noted that the positive electrode side and the negative electrode side may be configured oppositely.

Moreover, in the present embodiment, in the step (S2) of joining current collector 410 to negative electrode tab groups 220, 270, negative electrode tab groups 220, 270 are joined to current collector 410 with first electrode assembly 201 being disposed on one side with respect to current collector 410 and second electrode assembly 202 being disposed on the other side with respect to current collector 410 as shown in Fig. 14. In this state, since each of the main body portions of first electrode assembly 201 and second electrode assembly 202 and current collector 410 are located relatively away from each other, there are many options for joining method, and each of negative electrode tab groups 220, 270 can be relatively short. Since each of negative electrode tab groups 220, 270 is short, the internal space of case 100 can be effectively utilized to further improve the energy density of secondary battery 1.

Moreover, since current collector 431 and current collector 432 are curved in the same direction with first electrode assembly 201 and second electrode assembly 202 being overlapped with each other in the present embodiment, current collector 432 can be disposed by efficiently utilizing a space on the inner peripheral side of the curved portion of current collector 431. As a result, the size of positive electrode current collector 400B can be further reduced to improve the energy density of secondary battery 1.

Moreover, in the present embodiment, by joining current collectors 431, 432 to positive electrode tab groups 250, 280 in advance (S3 and S4), positive electrode tab groups 250, 280 can be protected to suppress damage (deformation, tear, or the like) thereof in the subsequent step (S6) of overlapping first electrode assembly 201 and second electrode assembly 202 with each other and the subsequent step (S8) of inserting first electrode assembly 201 and second electrode assembly 202 into case main body 110. As a result, secondary battery 1 having high reliability can be provided.

### (Supplement)

In the present embodiment, as shown in Fig. 12, current collectors 431, 432 are bent to be curved in the same direction with first electrode assembly 201 and second electrode assembly 202 being overlapped with each other, but current collectors 431, 432 may be bent to be curved in opposite directions.

In the present embodiment, it has been illustratively described that in the state shown in Fig. 12, current collectors 431, 432 are joined to positive electrode tab groups 250, 280 from the same side (left side in the figure with respect to positive electrode tab groups 250, 280). In this case, in the state (Figs. 14 and 15) before overlapping first electrode assembly 201 and second electrode assembly 202 with each other, current collectors 431, 432 are joined to positive electrode tab groups 250, 280 from different sides.

It should be noted that the scope of the present technology is not limited to the above, and in the state shown in Fig. 12, current collectors 431, 432 may be joined to positive electrode tab groups 250, 280 from different sides. In this case, in the state (Figs. 14 and 15) before overlapping first electrode assembly 201 and second electrode assembly 202 with each other, current collectors 431, 432 are joined to positive electrode tab groups 250, 280 from the same side.

In the present embodiment, it has been illustratively described that the bent type current collector 430 constituted of the metal plate stack is used on the positive electrode side (Fig. 12) and current collector 410 constituted of the single member composed of the metal is used on the negative electrode side (Fig. 11); however, the scope of the present technology is not limited thereto, and there may be employed a structure opposite to the above between the positive electrode side and the negative electrode side. Moreover, instead of the single member, current collector 410 formed by integrating a plurality of members may be used.

### (Second Embodiment: Configuration of Current Collector)

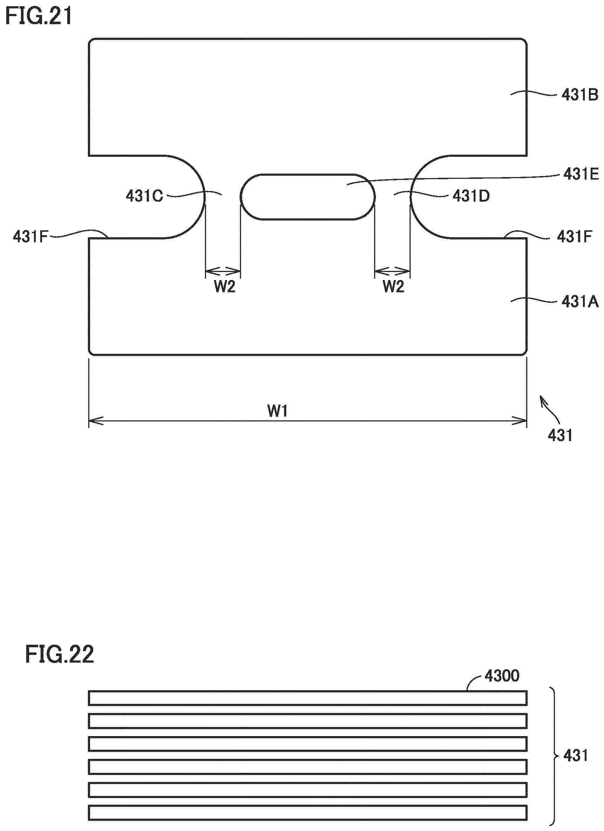

The configurations of current collectors 431, 432 will be described with reference to Figs. 21 to 23. Current collector 431 (first current collector) is connected to positive electrode tab group 250, and current collector 432 (second current collector) is connected to positive electrode tab group 280. Since current collector 431 and current collector 432 have the same configuration, the configuration of current collector 431 will be described below.

Current collector 431 is formed by stacking a plurality of, for example, about fifteen, metal plates 4300 each having a thickness of, for example, about 0.1 mm (a smaller number of metal plates is illustrated in the figures for the sake of simplicity). Current collector 431 includes: a first region 431A connected to positive electrode tab group 250; and a second region 431B connected to positive electrode current collection portion 420 serving as another conductive member.

Width W1 of first region 431A and width W1 of second region 431B are provided to be the same.

In current collector 431, each of a first fuse portion 431C and a second fuse portion 431D is provided between first region 431A and second region 431B as a connection portion that is melted and disconnected when a current having a predetermined value or more flows. Width W2 of each of first fuse portion 431C and second fuse portion 431D is provided to be smaller than width W1 of each of first region 431A and second region 431B.

A first hole portion 431E is provided between first fuse portion 431C and second fuse portion 431D. First notches 431F each having a U shape and recessed inward are provided at respective end sides of first fuse portion 431C and second fuse portion 431D. The shape of first hole portion 431E is not limited to an elliptical shape, and may be a quadrangular shape, a circular shape, or the like. The shape of each of first notches 431F is also not limited to the U shape.

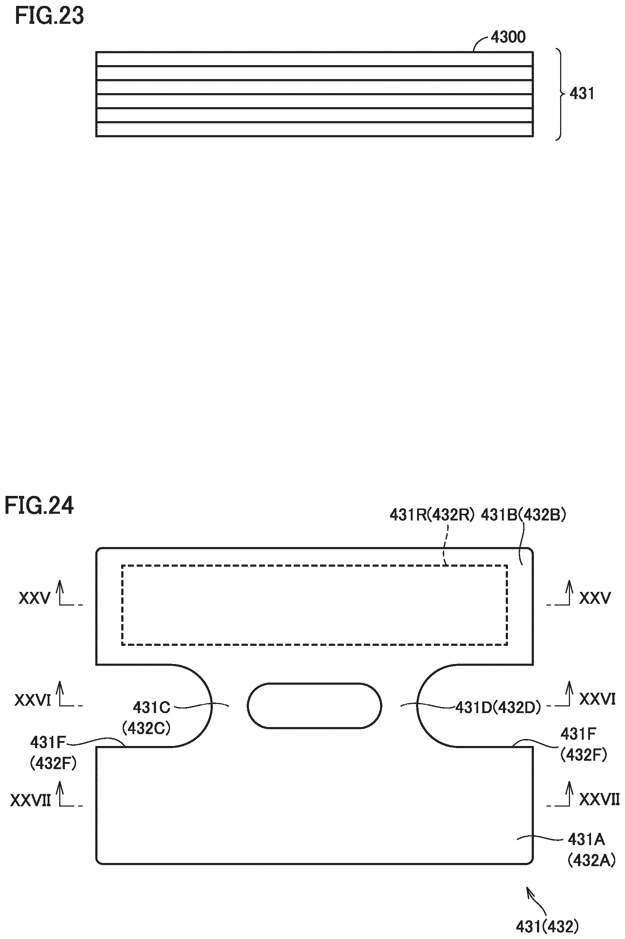

When viewed in a developed view as shown in Fig. 24, "the area of the region in which the metal plates are joined together at a portion to serve as the bent portion"/"the area of the portion to serve as the bent portion (except for the areas of first notches 431F and first hole portion 431E)" is preferably 0.5 or less, is more preferably 0.3 or less, and is most preferably 0.1 or less.

It should be noted that it is most preferable that the metal plates are not joined together at the portion to serve as the bent portion. Here, the portion to serve as the bent portion refers to a portion bent to be curved when current collector 431 is bent. For example, in Fig. 24, the portion to serve as the bent portion is a portion located between two first notches 431F.

### (Joining State)

Next, a joining state of current collector 431 will be described with reference to Figs. 24 to 27.

In a state before being connected to the tab group of electrode assembly 200, joining may be performed in advance by ultrasonic joining, diffusion joining, or the like in second region 431B of current collector 431 to be connected to positive electrode current collection portion 420, thereby providing a first joining region 431R (first connection step). In the case of the joining using the ultrasonic joining, below-described marks (a plurality of recesses) by an anvil and a horn at the time of the ultrasonic joining are provided in surfaces of first joining region 431R. Apart from the ultrasonic joining or the diffusion joining, first joining region 431R of second region 431B may be formed by application of a high energy ray such as laser welding.

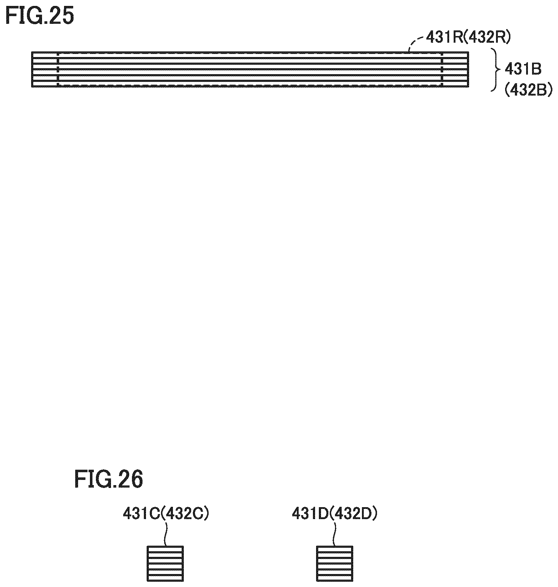

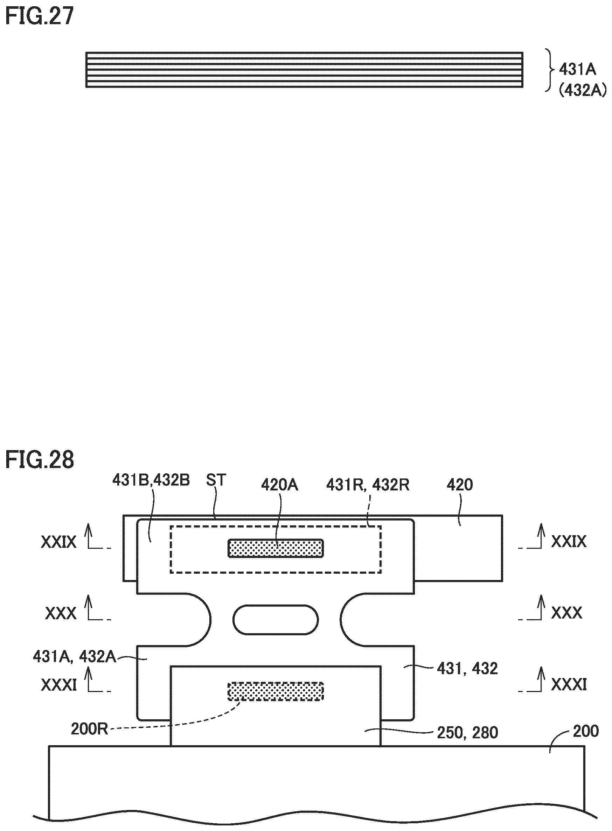

On the other hand, as shown in Figs. 26 and 27, no joining is performed in advance in first region 431A, first fuse portion 431C, and second fuse portion 431D. Thus, since no joining is performed particularly in first fuse portion 431C and second fuse portion 431D, current collector 431 can be readily bent in this region.

First region 431A and second region 431B are provided to have the same area in the present embodiment; however, the area of the second region may be larger than the area of the first region as described with regard to current collector 430 of the first embodiment. For example, the area of the second region may be 1.5 times or more as large as the area of the first region (form shown in Fig. 20).

Although current collector 431 has been described above with reference to Figs. 21 to 27, the same applies to current collector 432. Metal plate 4300, first region 431A, second region 431B, first fuse portion 431C, second fuse portion 431D, first hole portion 431E, first notch 4300, and first joining region 431R each described with regard to current collector 431 respectively correspond to a metal plate 4300, a third region 432A, a fourth region 432B, a third fuse portion 432C, a fourth fuse portion 432D, a second hole portion 432E, a second notch 432F, and a second joining region 432R in current collector 432 (see Fig. 24).

(Connection to Positive Electrode Tab Groups 250, 280/Positive Electrode Current Collection Portion 420)

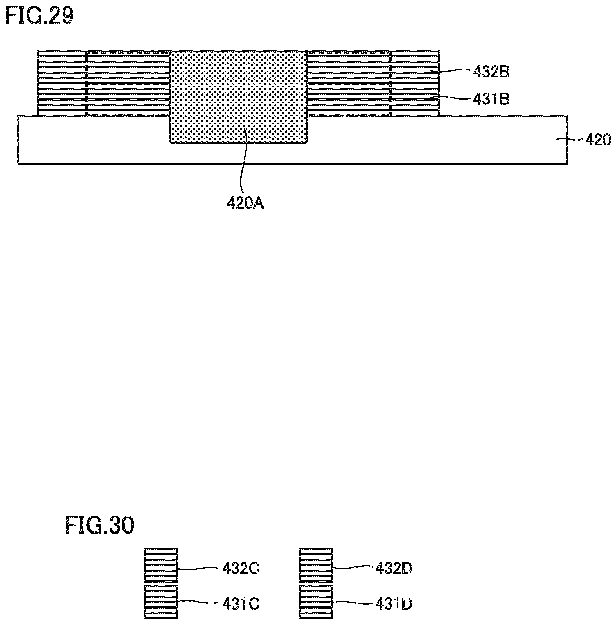

Next, the connection of current collectors 431, 432 to positive electrode tab groups 250, 280 and positive electrode current collection portion 420 will be described with reference to Figs. 28 to 32 (second connection step).

As shown in Fig. 28, in the developed plan view, current collectors 431, 432 are stacked and overlapped with each other at the same position. As shown in Figs. 28 to 30, in a state in which second region 431B of current collector 431 (first current collector) and fourth region 432B of current collector 432 (second current collector) are overlapped with each other on positive electrode current collection portion 420, first joining region 431R and second joining region 432R are joined to positive electrode current collection portion 420 by laser welding or the like, thereby providing joining region 420A (second connection step).

Metal plates 4300 in second region 431B at a region not joined to positive electrode current collection portion 420 are also joined together in a first joining region 431R. In this case, the area of first joining region 431R in which metal plates 4300 are joined together (the area when viewed along the stacking direction of metal plates 4300) may be larger than the area of joining region 420A. The area of first joining region 431R in which metal plates 4300 are joined together is preferably twice or more, more preferably 5 times or more, and further preferably 10 times or more as large as the area of joining region 420A. The same applies to a relation between joining region 420A and second joining region 432R.

When first joining region 431R and second joining region 432R are disposed to be overlapped with each other on positive electrode current collection portion 420, tip portions ST of first joining region 431R and second joining region 432R are stacked to be aligned with each other in the figure; however, the tip of first joining region 431R may be disposed to protrude with respect to the tip of second joining region 432R. Thus, first joining region 431R can be recognized when viewed in a plan view.

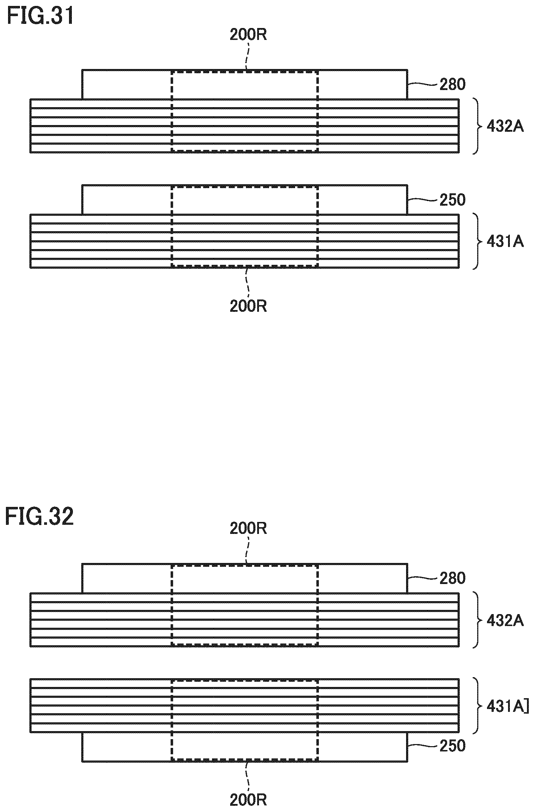

On the other hand, as shown in Figs. 28 and 31, positive electrode tab group 250 is joined to one surface of first region 431A of current collector 431 (first current collector) by ultrasonic joining or the like so as to form positive electrode joining region 200R, and positive electrode tab group 280 is joined to one surface of third region 432A of current collector 432 (second current collector) by ultrasonic joining or the like so as to form positive electrode joining region 200R (state shown in Fig. 12).

As shown in Fig. 32, positive electrode joining region 200R for joining with positive electrode tab group 250 may be formed at one surface of first region 431A of current collector 431, and positive electrode joining region 200R for joining with positive electrode tab group 280 may be formed at the other surface of third region 432A of current collector 432.

As shown in Fig. 28 again, in order to stabilize the stacking state in current collector 431, current collector 431 may include a region in which the metal plates are joined together in first region 431A at a position not overlapping positive electrode joining region 200R joined to positive electrode tab group 250 when viewed in a plan view. The same applies to current collector 432.

As shown in Fig. 12, in an assembled state as secondary battery 1, the region (first fuse portion 431C and second fuse portion 431D) between first region 431A and second region 431B of current collector 431 is bent and first region 431A and second region 431B of current collector 431 face each other. Similarly, the region (third fuse portion 432C and fourth fuse portion 432D) between third region 432A and fourth region 432B of current collector 432 is bent and third region 432A and fourth region 432B of current collector 432 face each other.

Each of the bent regions of current collectors 431, 432 includes a region in which the metal plates are not joined together in advance. As a result, each of the current collectors is readily bent while maintaining a certain cross sectional area. As a result, each of positive electrode tab group 250 and positive electrode tab group 280 is bent to the minimum necessary, with the result that the tab group can be suppressed from being unintendedly bent or curved. Further, it is possible to save a space for the region required for current collection. It should be noted that although it is not essential, the bent region is preferably formed to have a width narrower than that of each of the other regions.

As a result, for example, it is possible to provide a secondary battery having a high volume energy density while maintaining an excellent output property (or suppressing heat generation).

### (Third Embodiment)

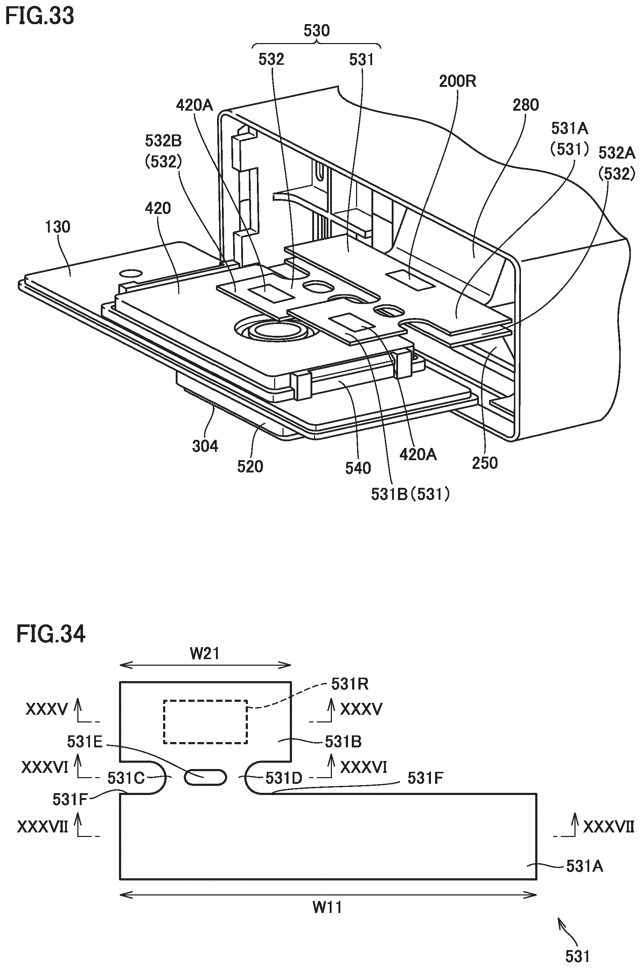

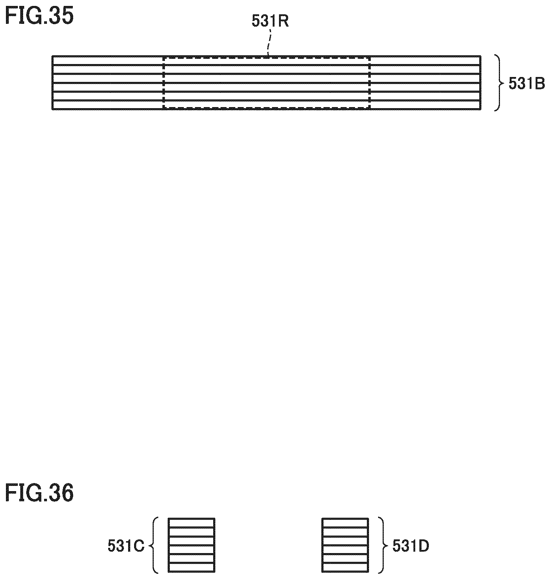

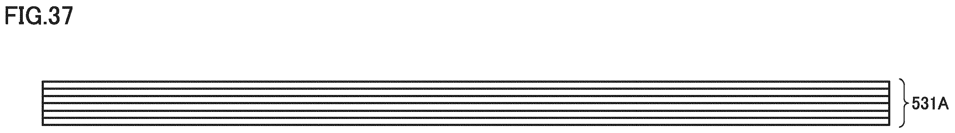

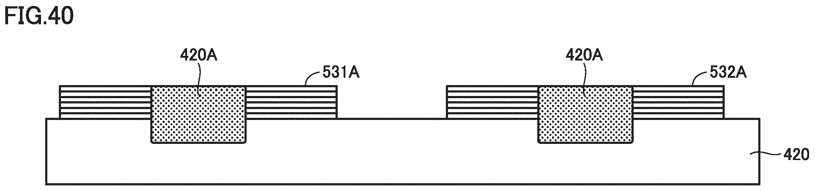

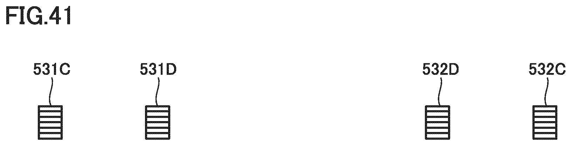

Next, another configuration of the current collector will be described with reference to Figs. 33 to 42. In each of the above-described embodiments, the first current collector and the second current collector are provided to be overlapped with each other such that their shapes are aligned with each other; however, in the present embodiment, a configuration is shown in which the second region of the first current collector and the fourth region of the second current collector are joined to the other conductive member in such a positional relation that they do not face each other.

As shown in Fig. 33, a first region 531A of a current collector 531 (first current collector) is joined to positive electrode tab group 250 by positive electrode joining region 200R, and a second region 531B thereof is joined to positive electrode current collection portion 420 by joining region 420A. A third region 532A of a current collector 532 (second current collector) is joined to positive electrode tab group 280 by positive electrode joining region 200R, and a fourth region 532B thereof is joined to positive electrode current collection portion 420 by joining region 420A. The joining state and the like are the same as those in the second embodiment.

As shown in Figs. 34 to 36, the basic configuration of current collector 531 is the same as that of current collector 431 described in the second embodiment, but is different therefrom in terms of the form of the unbent state. As with current collector 431, current collector 531 is provided with first region 531A, second region 531B, a first fuse portion 531C, a second fuse portion 531D, a first hole portion 531E, first notches 531F, and a first joining region 531R.

In this current collector 531, the area of first region 531A is provided to be larger than the area of second region 531B, and in the figure, the left end portion of first region 531A is provided to be aligned with the left end portion of second region 531B.

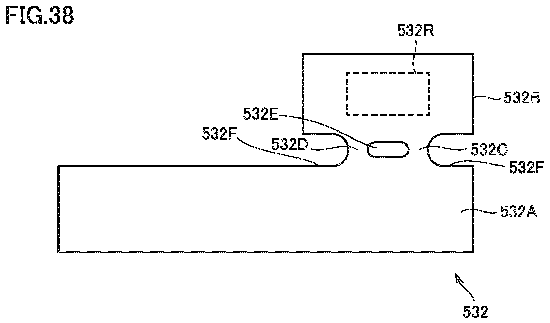

On the other hand, as shown in Fig. 38, current collector 532 is provided with third region 532A, fourth region 532B, a third fuse portion 532C, a fourth fuse portion 532D, a second hole portion 532E, second notches 532F, and a second joining region 532R.

Current collector 531 and current collector 532 have bilaterally symmetrical forms which become the same form when rotated by 180° around an axis orthogonal to the width direction in the figure, and are provided in such a positional relation that second region 531B of current collector 531 and fourth region 532B of current collector 532 are not overlapped with each other in the state in which current collector 531 and current collector 532 are overlapped.

When the width of first region 531A is defined as W11 and the width of second region 531B is defined as W21 in current collector 531, a dimensional relation of W21≤0.5×W11 may be satisfied. The same applies to current collector 532.

(Connection to Positive Electrode Tab Groups 250, 280/Positive Electrode Current Collection Portion 420)

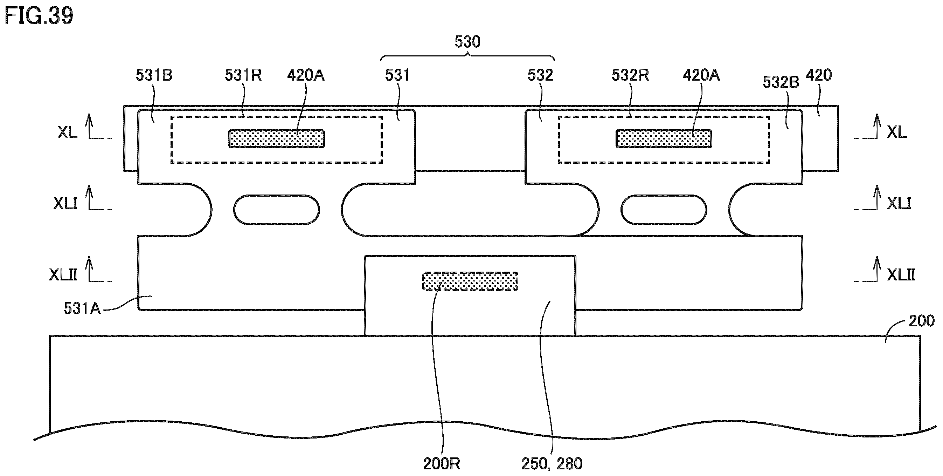

Next, the connection of current collector 531 and current collector 532 to positive electrode tab groups 250, 280 and positive electrode current collection portion 420 will be described with reference to Figs. 39 to 42. When current collector 531 and current collector 532 having the above configurations are used, second region 531B of current collector 531 and fourth region 532B of current collector 532 are disposed so as not to be overlapped with each other and so as to be deviated from each other and are each joined to positive electrode current collection portion 420 by laser welding or the like, thereby providing joining regions 420A.

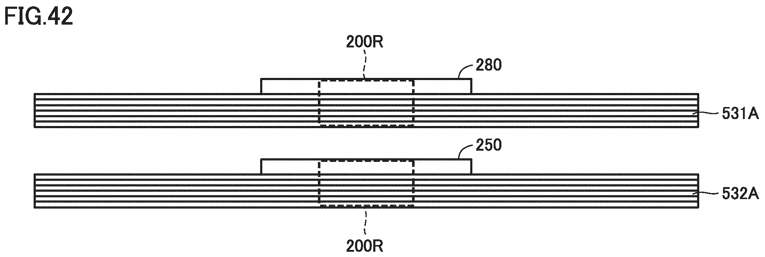

For the connection to positive electrode tab groups 250, 280, as shown in Fig. 42 (as with Fig. 31), positive electrode tab group 250 of first electrode assembly 201 is joined to one surface of first region 531A of current collector 531 by ultrasonic joining or the like to form positive electrode joining region 200R, and positive electrode tab group 280 of second electrode assembly 202 is joined to one surface of third region 532A of current collector 532 by ultrasonic joining or the like to form positive electrode joining region 200R.

As with the connection structure shown in Fig. 32, positive electrode joining region 200R for joining with positive electrode tab group 250 may be formed at one surface of first region 531A of current collector 531, and positive electrode joining region 200R for joining with positive electrode tab group 280 may be formed at the other surface of third region 532A of current collector 532.

Since second region 531B of current collector 531 and fourth region 532B of current collector 532 are thus disposed so as not to be overlapped with each other and so as to be deviated from each other, welding is readily performed because the welding can be performed separately for two positive electrode joining regions 200R, thus resulting in improved processability. Further, since the welding is readily performed, the joining portions can be formed more stably and resistance can be therefore reduced, with the result that heat generation during charging/discharging can be effectively suppressed. As a result, for example, it is possible to provide a secondary battery having a high volume energy density while maintaining an excellent output property (or suppressing heat generation).

### (Fourth Embodiment)

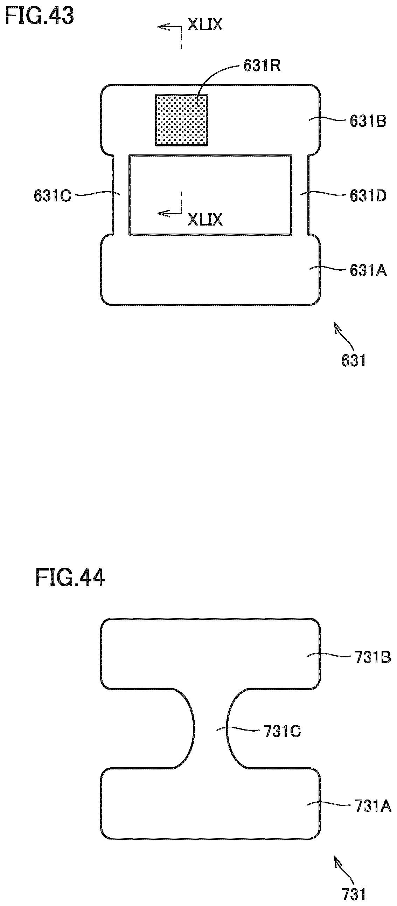

With reference to Figs. 43 to 48, other forms of current collectors that can be employed for the first current collector and the second current collector will be described.

Since the basic configuration of each of first to fifth shape-modified current collectors is the same as that of current collector 431 described in the second embodiment, only a planar form thereof will be described below.

As shown in Fig. 43, a shape-modified current collector 631 includes a first region 631A and a second region 631B, and first region 631A and second region 631B are coupled to each other at respective end sides thereof by a first fuse portion 631C and a second fuse portion 631D. Since first fuse portion 631C and second fuse portion 631D are thus provided at the respective end sides, a current collector resistant to twisting can be obtained. As compared with a shape-modified current collector 831 to be described later, dimensional management is facilitated.

As shown in Fig. 44, a shape-modified current collector 731 includes a first region 731A and a second region 731B, and first region 731A and second region 731B are coupled to each other at a central portion thereof by a first fuse portion 731C. In the case of this configuration, dimensional management is facilitated as compared with the case of shape-modified current collector 631.

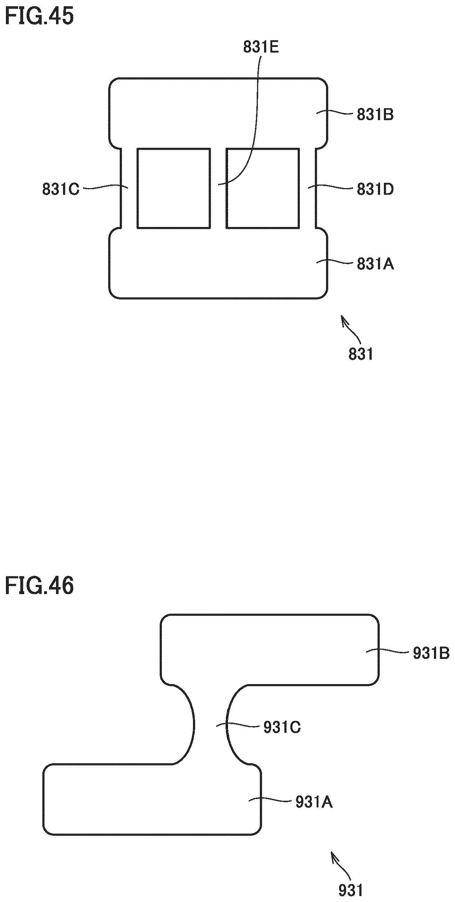

As shown in Fig. 45, a shape-modified current collector 831 includes a first region 831A and a second region 831B, and first region 831A and second region 831B are coupled to each other at respective end sides thereof by a first fuse portion 831C and a second fuse portion 831D, and are coupled to each other by a third fuse portion 831E at a central portion thereof. In the case of this configuration, a current collector resistant to twisting is obtained.

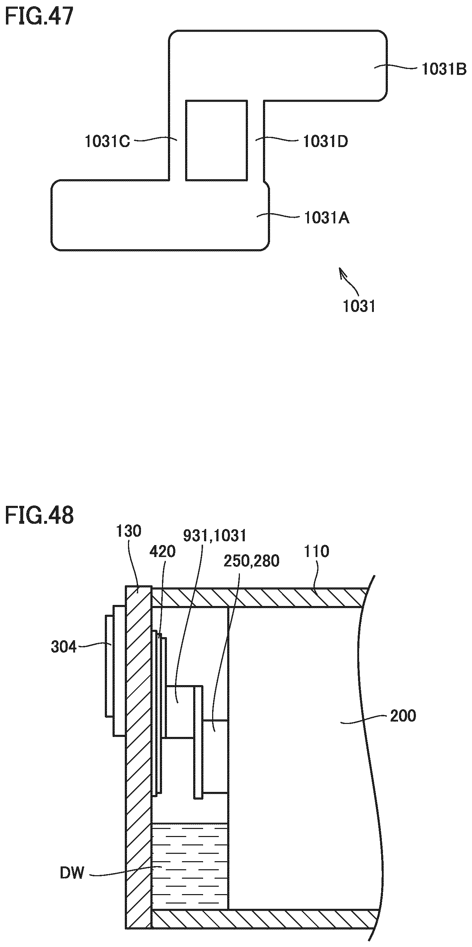

As shown in Fig. 46, a shape-modified current collector 931 includes a first region 931A and a second region 931B, and first region 931A and second region 931B are coupled to each other by a first fuse portion 931C at a position with first region 931A and second region 931B being deviated from each other. Since first region 931A and second region 931B are deviated from each other in this way, it is possible to design an arrangement to effectively utilize the internal space of case main body 110. Further, as shown in Fig. 48, when shape-modified current collector 931 is used, an electric connection position can be located away from an electrolyte solution DW accumulated in case main body 110. As a result, the reliability of the secondary battery can be improved.

As shown in Fig. 47, a shape-modified current collector 1031 includes a first region 1031A and a second region 1031B, and first region 1031A and second region 1031B are coupled to each other by a first fuse portion 1031C and a second fuse portion 1031D at positions with first region 1031A and second region 1031B being deviated from each other. Since first region 1031A and second region 1031B are deviated from each other in this way, as described with reference to Fig. 48, the same functions and effects as those of shape-modified current collector 931 can be obtained. Furthermore, since there are the two fuse portions, a current collector resistant to twisting is obtained.

### (Fifth Embodiment)

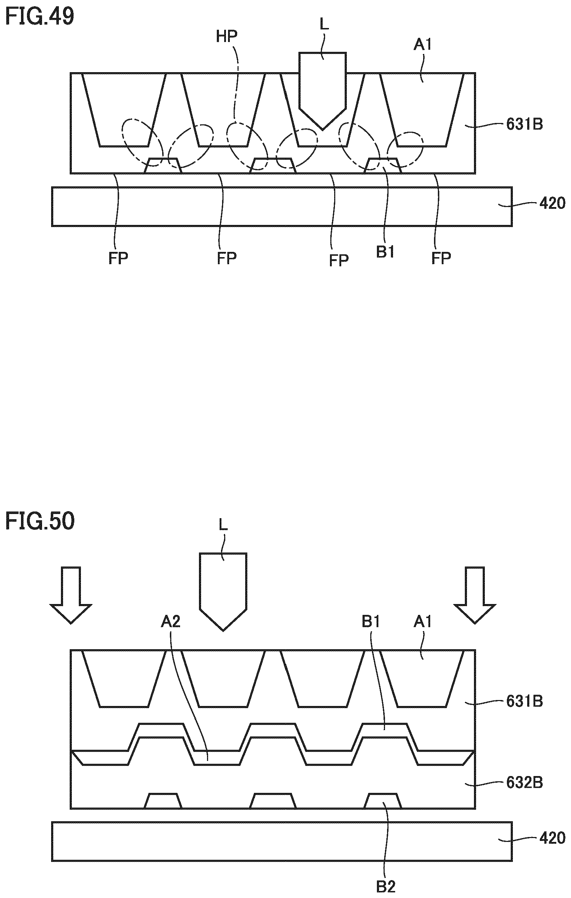

The first joining region of the metal plates of the current collector will be described with reference to Figs. 49 and 50. This applies to any of the current collectors (the first current collector and the second current collector) described in the above embodiments; however, here, first joining region 631R formed in second region 631B of shape-modified current collector 631 described with reference to Fig. 43 will be described.

When the structure of the final product is observed, pressing marks described below can be recognized in a region other than the region in which joining region 420A is provided.

As shown in Fig. 49, when stacking and ultrasonically joining metal plates 4300, vibration and load are applied to first joining region 631R formed in second region 631B of shape-modified current collector 631 with first joining region 631R being sandwiched between the anvil and the horn used at the time of the ultrasonic joining. The anvil (receiving jig) is a jig for positioning and fixing second region 631B to avoid dissipation of vibration energy, and the horn resonates with vibration of a vibrator and applies the vibration and load to second region 631B.

On this occasion, patterns (pressing marks provided by the anvil and the horn) of irregularities formed in the front and rear surfaces of second region 631B are different from each other and the front and rear surfaces can be therefore readily distinguished from each other, with the result that a specific surface can be securely brought into abutment with positive electrode current collection portion 420. In Fig. 49, pressing marks A1 can be distinguished as a plurality of pressing marks (a plurality of first recesses) provided by the horn, and pressing marks B1 can be distinguished as a plurality of pressing marks (a plurality of second recesses) provided by the anvil. Thus, the front and rear surfaces of second region 631B can be readily distinguished from each other, thereby improving productivity of secondary battery 1.

Further, as differences in form between pressing marks A1 and pressing marks B1, there are (A) a difference in diameter between the pressing marks (first and second recesses) and (B) a difference in arrangement between the pressing marks (first and second recesses), with the result that local high-load portion regions HP (regions surrounded as HP in the figure) are formed between the front and rear surfaces of second region 631B to provide joining strength between the metal plates.

Furthermore, a surface (regions indicated as FP in the figure) of second region 631B having a large number of flat portions are brought into abutment with positive electrode current collection portion 420, and the joining portion between second region 631B and positive electrode current collection portion 420 is provided by laser, thereby increasing a joining margin to result in improved joining strength.

Further, the surface of second region 631B to have a larger abutment area in a regions to be subjected to laser application when brought into abutment with positive electrode current collection portion 420 is brought into abutment with positive electrode current collection portion 420, and laser application L is performed from the opposite surface, thereby improving the joining strength by piercing welding.

When stacking the two metal plate stacks with second region 631B of shape-modified current collector 631 (first current collector) and fourth region 632B of shape-modified current collector 632 (second current collector) as shown in Fig. 50, the ultrasonically joined portions thereof are overlapped with each other and are laser-welded to positive electrode current collection portion 420. In this case, it is preferable that pressing marks B1 and pressing marks A2 formed in the front and rear surfaces of the current collectors are engaged with each other to increase surfaces at which second region 631B and fourth region 632B are brought into abutment with each other when pressing from above.

When the current collector disposed on the upper side is defined as the first current collector and the current collector disposed on the lower side and in contact with the other conductive member is defined as the second current collector, it is desirable that the protrusions in the surface of the first current collector facing the second current collector enter the recesses in the surface of the second current collector facing the first current collector and the area of the contact portion between the first current collector and the second current collector on a plane parallel to the conductive member is increased when pressing the first current collector in a direction opposite to a plane on which the second current collector is present.

The ultrasonic joining marks provided in the first current collector and the second current collector may be the same or different.

It should be noted that the plurality of pressing marks (recesses) formed when sandwiched between the anvil and the horn when performing the ultrasonic joining may be provided in the surfaces of positive electrode tab groups 250, 280. In this case, when the first recesses are formed as the plurality of pressing marks in first region 431A of current collector 431 at a portion not joined to positive electrode tab group 250 and the second recesses are formed as the plurality of pressing marks in the surface of positive electrode tab group 250, the depth of each of the first recesses is preferably smaller than the depth of the each of second recesses. The area of each of first recesses when viewed in a plan view is preferably smaller than the area of each of second recesses. The same applies to a relation between third region 432A of current collector 432 and positive electrode tab group 280.

When the structure of the final product is observed, the above configuration can be recognized in the region other than the region in which positive electrode joining region 200R is provided. Also with this configuration, the same functions and effects as those described with reference to Figs. 49 and 50 can be obtained.

### (Other Preferable Forms)

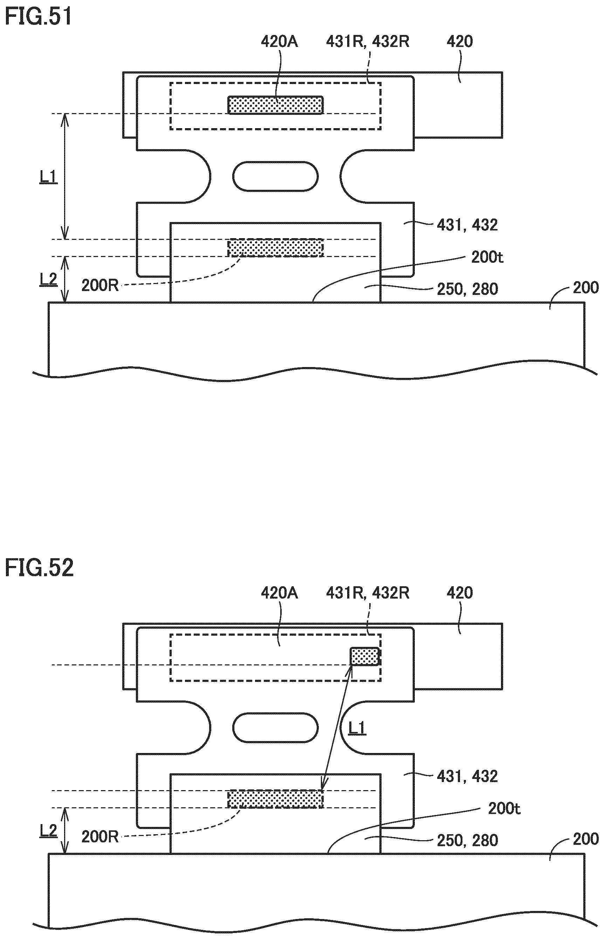

A preferable form of the connection of current collectors 431, 432 to positive electrode tab groups 250, 280 and positive electrode current collection portion 420 as described with reference to Fig. 28 will be described with reference to Figs. 51 and 52.

In the developed view of Fig. 51, when the shortest distance between joining region 420A and positive electrode joining region 200R is defined as a distance L1 and the shortest distance between root 200t of positive electrode tab group 250 of electrode assembly 200 and positive electrode joining region 200R is defined as a distance L2, L1≥L2 is preferable, L1≥1.1×L2 is more preferable, and L1≥1.2×L2 is further preferable.

For example, as shown in the developed view of Fig. 52, when joining region 420A and positive electrode joining region 200R are provided to be deviated from each other, the shortest distance between a corner portion of joining region 420A and a corner portion of positive electrode joining region 200R serves as distance L1 as shown in the figure.

Distance L1 is based on a position closest to positive electrode joining region 200R when there is a deviation between the plurality of metal plates, and distance L2 is also based on a position closest to root 200t of positive electrode tab group 250 when there is a deviation between the plurality of tabs.

### (As to Lengths of Metal Plates 4300)

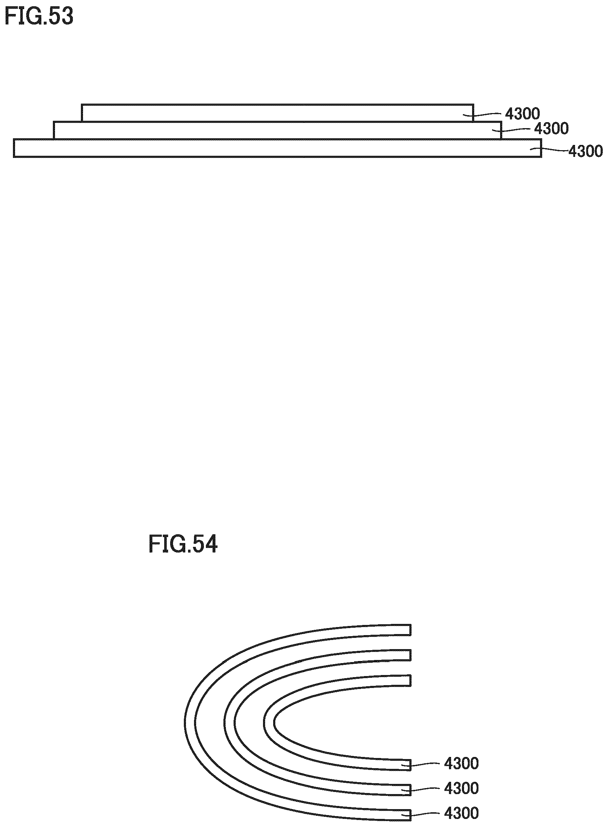

The lengths of metal plates 4300 used for each of current collector 431 (first current collector) and current collector 432 (second current collector) will be described with reference to Figs. 53 and 54.

As shown in Fig. 53, the length of a metal plate located on the outermost peripheral side (lowermost position in Fig. 53) in the bent state may be provided to be longer than the length of each of metal plates 4300 located on the inner side in the bent state.

More specifically, in the case of current collector 431 (see Fig. 21), the length of metal plate 4300 located on the outermost peripheral side when bent is preferably the longest, the lengths of metal plates 4300 located on the inner side are preferably shorter, and the length of metal plate 4300 on the innermost periphery is preferably the shortest in a direction from first region 431A toward second region 431B. However, the lengths of some of metals plates 4300 may be the same, or metals plates 4300 may be arranged irrespective of the lengths.

As shown in Fig. 54, when bending metal plates 4300 stacked, the current collector is readily bent, thereby improving productivity of the secondary battery. Further, since the current collector can be efficiently accommodated in case main body 110, the energy density of the secondary battery can be improved.

### (Arrangement of First Current Collector, First Tab Group, Second Current Collector, and Second Tab Group in Stacking Direction)

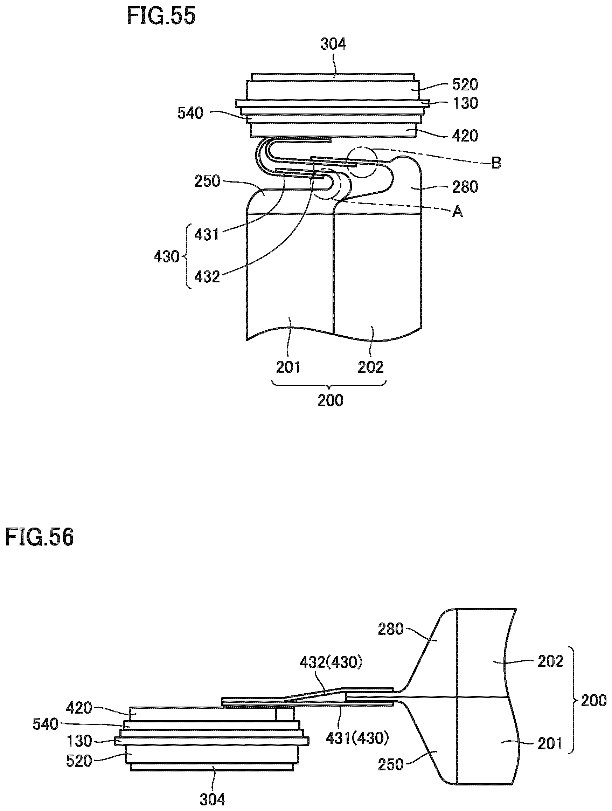

The arrangement of current collector 431 (first current collector), positive electrode tab group 250 (first tab group), current collector 432 (second current collector), and positive electrode tab group 280 (second tab group) in the stacking direction will be described with reference to Figs. 55 and 56.

Either of the configurations shown in Figs. 55 and 56 can be employed, and the following effects can be obtained when each of the configurations is employed.

The configuration shown in Fig. 55 represents a configuration in which the connection is made with current collector 431 (first current collector), positive electrode tab group 250 (first tab group), current collector 432 (second current collector), and positive electrode tab group 280 (second tab group) being arranged in this order.

In this configuration, the length of each of the tab groups can be facilitated to be short and a ratio of each of the first current collector and the second current collector can be facilitated to be large in a ratio of components in the conductive path. Therefore, breakage of a foil in the tab group is less likely to occur, with the result that a secondary battery having higher reliability can be manufactured.

The configuration shown in Fig. 56 represents a configuration in which the connection is made with current collector 431 (first current collector), positive electrode tab group 250 (first tab group), positive electrode tab group 280 (second tab group), and current collector 432 (second current collector) being arranged in this order. The total length of the first current collector and the first tab group and the total length of the second current collector and the second tab group can be short, with the result that the current collectors and the tab groups can be accommodated in the secondary battery in a space-saving manner. As a result, a secondary battery having a higher energy density can be manufactured.

### (As to More Preferable Form)

As shown in Fig. 55, in a region of current collector 431 surrounded by A in the figure, a chamfered or curvature portion may be formed at an end portion (corner portion) thereof facing positive electrode tab group 250. With this configuration, it is possible to suppress occurrence of damage to positive electrode tab group 250. The same applies to a region of current collector 432 surrounded by B in the figure.

Although the positive electrode side has been illustratively described in the description of the above embodiments, the same configuration can be applied to the negative electrode side.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A secondary battery comprising:
an electrode assembly (200) including a first electrode (240) and a second electrode (210) having a polarity different from a polarity of the first electrode (240);
a case (100) that accommodates the electrode assembly (200);
a first tab group (250, 280) in which a plurality of first electrode tabs (260) each electrically connected to the first electrode (240) are stacked; and
a first current collector (431) connected to the first tab group (250, 280),
wherein
the first current collector (431) is a first stack in which a plurality of metal plates (4300) are stacked,
the first current collector (431) includes a first region (431A) and a second region (431B),
the first tab group (250, 280) is joined to the first region (431A),
another conductive member is joined to the second region (431B), and
the first current collector (431) is bent between the first region (431A) and the second region (431B).

2. The secondary battery according to claim 1, comprising:
a second tab group (280) in which a plurality of second electrode tabs (220) each electrically connected to the first electrode (240) are stacked; and
a second current collector (432) connected to the second tab group (280),
wherein
the second current collector (432) is a second stack in which a plurality of metal plates (4300) are stacked,
the second current collector (432) includes a third region (432A) and a fourth region (432B),
the second tab group (280) is joined to the third region (432A),
the other conductive member is joined to the fourth region (432B), and
the second current collector (432) is bent between the third region (432A) and the fourth region (432B).

3. The secondary battery according to claim 2, wherein the first current collector (431) and the second current collector (432) are overlapped with each other and are joined to the other conductive member.

4. The secondary battery according to claim 3, wherein
the other conductive member, the first current collector (431), and the second current collector (432) are stacked in this order, and
a tip of the first current collector (431) protrudes with respect to a tip of the second current collector (432).

5. The secondary battery according to any one of claims 2 to 4, wherein
a first fuse portion (431C) is provided in the first current collector (431),
a second fuse portion (431D) is provided in the second current collector (432), and
the first fuse portion (431C) and the second fuse portion (431D) are disposed to be separated from each other.

6. The secondary battery according to any one of claims 2 to 5, wherein the second region (431B) of the first current collector (431) and the fourth region (432B) of the second current collector (432) are joined to the other conductive member in such a positional relation that the second region (431B) and the fourth region (432B) do not face each other.

7. The secondary battery according to any one of claims 1 to 6, wherein the first current collector (431) includes a region in which the plurality of metal plates (4300) are joined together in the first region (431A) at a region not joined to the first tab group (250, 280).

8. The secondary battery according to claim 7, wherein
a plurality of first recesses are formed in the first region (431A) of the first current collector (431) at the region not joined to the first tab group (250, 280),
a plurality of second recesses are formed in a surface of the first tab group (250, 280), and
a depth of each of the first recesses is smaller than a depth of each of the second recesses.

9. The secondary battery according to claim 7 or 8, wherein
a plurality of first recesses are formed in the first region (431A) of the first current collector (431) at the region not joined to the first tab group (250, 280),
a plurality of second recesses are formed in a surface of the first tab group (250, 280), and
an area of each of the first recesses is smaller than an area of each of the second recesses.

10. The secondary battery according to any one of claims 1 to 9, wherein the first current collector (431) includes a region in which the plurality of metal plates (4300) are joined together in the second region (431B) at a region not joined to the other conductive member.

11. The secondary battery according to any one of claims 1 to 10, wherein the first current collector (431) has a region in which the metal plates (4300) are not joined together in a region in which the first current collector (431) is bent between the first region (431A) and the second region (431B).

12. The secondary battery according to any one of claims 1 to 11, wherein a length of a metal plate (4300) disposed on an outermost peripheral side of the first current collector (431) in the region in which the first current collector (431) is bent is longer than a length of a metal plate (4300) disposed on an inner side with respect to the metal plate (4300) disposed on the outermost peripheral side.

13. The secondary battery according to any one of claims 1 to 12, wherein a length from a joining portion between the first current collector (431) and the first tab group (250, 280) to a joining portion between the first current collector and the other conductive member is longer than a length from a root of the first tab group (250, 280) to the joining portion between the first current collector (431) and the first tab group (250, 280).

14. A method of manufacturing a secondary battery, wherein
the secondary battery includes
an electrode assembly (200) including a first electrode (240) and a second electrode (210) having a polarity different from a polarity of the first electrode (240),
a case (100) that accommodates the electrode assembly (200),
a first tab group (250, 280) in which a plurality of first electrode tabs (260) each electrically connected to the first electrode (240) are stacked, and
a first current collector (431) connected to the first tab group (250, 280),
the first current collector (431) is a first stack in which a plurality of metal plates (4300) are stacked,
the first current collector (431) includes a first region (431A) and a second region (431B),
the first tab group (250, 280) is joined to the first region (431A),
another conductive member is joined to the second region (431B), and
the first current collector (431) is bent between the first region (431A) and the second region (431B),
the method comprising:
joining the first tab group (250, 280) to the first region (431A); and
bending the first current collector (431) between the first region (431A) and the second region (431B).

15. The method of manufacturing the secondary battery according to claim 14, wherein
the secondary battery includes
a second tab group (280) in which a plurality of second electrode tabs (220) each electrically connected to the first electrode (240) are stacked, and
a second current collector (432) connected to the second tab group (280),
the second current collector (432) is a second stack in which a plurality of metal plates (4300) are stacked,
the second current collector (432) includes a third region (432A) and a fourth region (432B),
the second tab group (280) is joined to the third region (432A),
the other conductive member is joined to the fourth region (432B), and
the second current collector (432) is bent between the third region (432A) and the fourth region (432B).

16. The method of manufacturing the secondary battery according to claim 15, comprising overlapping the first current collector (431) to which the first tab group (250, 280) is connected with the second current collector (432) to which the second tab group (280) is connected and connecting the first current collector (431) and the second current collector (432) to the other conductive member.

17. The method of manufacturing the secondary battery according to any one of claims 14 to 16, comprising ultrasonically joining the first tab group (250, 280) to the first region (431A) in a region in which the metal plates (4300) are joined together.

18. The method of manufacturing the secondary battery according to any one of claims 14 to 17, comprising joining the second region (431B) to the other conductive member by application of an energy ray before the bending.

19. The method of manufacturing the secondary battery according to claim 18, wherein the other conductive member is joined to the second region (431B) in a region in which the metal plates (4300) are joined together.
